# NEUE EUROPÄISCHE PATENTSCHRIFT

(11) **EP 1 855 867 B2**
(45) Veröffentlichungstag und Bekanntmachung des Hinweises auf die Entscheidung über den Einspruch: **23.11.2016**
(45) Hinweis auf die Patenterteilung: 07.07.2010
(21) Anmeldenummer: 06705361.1
(22) Anmeldetag: 27.02.2006
(51) Int. Cl.: B29C 45/76, G05B 19/042

(54) **VERFAHREN ZUR STEUERUNG UND BEDIENUNG EINER PRODUKTIONSZELLE SOWIE EINE STEUERVORRICHTUNG**
METHOD FOR CONTROLLING AND OPERATING A PRODUCTION CELL, AND CONTROL DEVICE
PROCEDE POUR LA COMMANDE ET L'UTILISATION D'UNE CELLULE DE PRODUCTION ET DISPOSITIF DE COMMANDE

(30) Priorität: 28.02.2005 CH 346052005; 19.08.2005 CH 13602005
(43) Veröffentlichungstag der Anmeldung: 21.11.2007
(73) Patentinhaber: Netstal-Maschinen AG, 8752 Näfels (CH)
(72) Erfinder: HAUSMANN, Manfred, CH-8753 Mollis (CH); WERFELI, Friedrich, CH-8762 Schwändli (CH); FRICK, Sascha, CH-5073 Gipf-Oberfrick (CH); CARRARA, Reto, CH-8967 Widen (CH)
(74) Vertreter: Wilhelm, Ludwig
(86) Internationale Anmeldenummer: PCT/CH2006/000121
(87) Internationale Veröffentlichungsnummer: WO 2006/089451

(56) Entgegenhaltungen:
- EP-A1- 0 573 912
- WO-A-93/01703
- WO-A-2005/009719
- WO-A1-2005/009719
- WO-A2-93/01703
- US-A1- 2003 090 018
- US-A1- 2003 090 018
- CHENG ET AL: "Flexible Process Control for Injection Molding Machines Using Java Technology" PROCEEDINGS OF THE AMERICAN CONTROL CONFERENCE, 8. Mai 2002 (2002-05-08), Seiten 4726-4731, XP002348429 Anchorage
- DECHERT,M.L.: "Naked Objects"[Online] 19. Juli 2004 (2004-07-19), Seiten 1-5, XP002348430 Gefunden im Internet: URL:http://www.st.informatik.tu-darmstadt. de/database/seminars/data/NakedObjects.pdf ?id=80> [gefunden am 2005-10-10]
- N.N.: "Totally PC-Cased Control"[Online] Dezember 2000 (2000-12), XP002329034 Gefunden im Internet: URL:ftp://ftp.beckhoff.com/Document/Applic at/1200e_husky.pdf> [gefunden am 2005-05-23]
- SANOFF S P: "An object-oriented controller for flexible assembly cells" IEE COLLOQUIUM, 1989, Seiten 7-10, XP006525106
- CHENG C.-C. ET AL: 'Flexible Process Control for Injection Molding Machines Using Java Technology' PROCEEDINGS OF THE AMERICAN CONTROL CONFERENCE Mai 2002, Seiten 4726 - 4731
- M.L. Dechert: "Naked Objects" (Online)
- N.N.: "Totally PC-Cased-Control" (Online)
- SANOFF S.P.: 'An object-oriented controller for flexible assembly cells' IEE COLLOQUIUM 16 November 1989, Seiten 7 - 10
- Lohe Christoph "Entwicklung von domänenspezifischen Modellierungssprachen

## Beschreibung

### Technisches Gebiet

Die Erfindung betrifft ein Verfahren zur Steuerung und Bedienung einer Produktionszelle zur Herstellung von Kunststoff-Spritzgiessteilen mit Einschluss wenigstens eines Teiles der ihr zugeordneten Peripheriegeräte, wobei der Produktionsablauf durch den Benutzer vorgegeben und parametriert wird. Die Erfindung betrifft ferner eine Einrichtung für das Steuern und Bedienen einer Produktionszelle für die Produktion von Kunststoff-Spritzteilen mit einer Spritzgiessmaschine mit Rechner- und Speichermitteln, bei der der Produktionsablauf an einer Bedieneinrichtung durch den Benutzer vorgebbar ist.

### Stand der Technik

Im Gegensatz zu klassischen Werkzeugmaschinen gibt es beim Kunststoffspritzgiessen kein zu bearbeitendes Werkstück. Das Werkstück muss vielmehr zyklisch aus flüssiger Schmelze innerhalb der Spritzgiessformen erzeugt werden. Die Spritzgiessmaschine weist als zweites Unterscheidungsmerkmal eine grosse Anzahl von Achsen auf. Im Zentrum ist die Spritzgiessform, welche im einfachsten Fall aus zwei Formhälften besteht und für das Giessen geschlossen und für die Teileentnahme geöffnet wird. In der Praxis kann die Spritzgiessform, welche auch als Spritzwerkzeug oder Werkzeug bezeichnet wird, hoch komplexe "Innereien" haben, die von der Maschinensteuerung angesteuert werden müssen.

Je nach spezifischer Ausrichtung der Spritzgiessmaschine weist diese z.B. einen automatisch arbeitenden Entnahmegreifer auf. Zu einer Spritzgiessmaschine gehören ferner Heiz- und Kühleinrichtungen sowie eine Rohmaterialzufuhr. Abhängig vom Automatisierungsgrad können Rohmaterialaufbereitungen, ferner Übergaberoboter, Transporteinrichtungen und eine Abpackung für fertige Spritzteile Teil der Produktionszelle sein. Das Werkzeug bzw. der Formschluss kann Hilfseinrichtungen, beispielsweise für einen schnellen Werkzeugwechsel, aufweisen. Wegen der Vielzahl möglicher weiterer Komponenten bzw. Hilfseinrichtungen spricht man von einer Produktionszelle. Zu einer Produktionszelle gehören oft auch zwei oder mehrere Spritzgiessmaschinen, welche über die Steuerung koordiniert betrieben werden können. In diesem Sinne wird in der Folge unter Produktionszelle wenigstens eine oder mehrere Spritzgiessmaschinen mit allen dazugehörigen Hilfselementen verstanden.

Gemäss den gängigen Steuerungskonzepten für Spritzgiessmaschinen werden alle Komponenten von einer zentralen Maschinensteuerung aus koordiniert und so gegeneinander verriegelt, dass keine groben Fehlfunktionen möglich sind. Die zentrale Steuerung weist alle notwendigen Rechner- und Speicherplätze auf, ferner eine Wissensbasis sowie eine Basisinfrastruktur zur Prozessdarstellung auf einem Bedienerterminal und ist mit BUS-Verbindungen ausgebildet für eine Kommunikation, das Weiterleiten von Steuerbefehlen an alle gegebenen Prozesskomponenten und für eine Vernetzung mit übergeordnetem Leitrechner, z.B. auch für eine Arbeit im Verbund mit anderen Spritzgiessmaschinen.

In der Fachwelt wird in Bezug auf Spritzgiessmaschinen zunehmend ein erster Problemkreis der steigenden Komplexität der ganzen Maschinensteuerung erkannt. Die Komplexität besteht vor allem darin, dass bei der auftragsorientierten Produktion von Spritzteilen nicht nur eine Vielfalt an Betriebsparametern und Prozessabläufen besteht, sondern dass jede Achse bzw. Baugruppe eine Vielzahl an eigenen Abläufen hat. Beispielsweise kann allein der Ausstosser für das Ausstossen der fertig gespritzten Teile über 5 bis 10 wählbare Abläufe verfügen. Aufgrund dieser Abläufe kann die Geschwindigkeit und der Weg des Ausstossers, ferner ein einfaches oder mehrfaches Rütteln des Ausstossers gewählt werden.

Das Konzept der primären Abstützung der Bedienung auf Parametern bzw. auf Prozessfunktionen erweist sich sowohl technisch als auch konzeptionell als problematisch, sowohl in Bezug auf die Weiterentwicklung der Maschinensteuerung als auch auf die Bedienbarkeit der Maschine. Zwar bieten Parameter technisch bezogen auf ihre Anzahl eine praktisch beliebige Skalierbarkeit. Sie sind jedoch für den Aufbau dynamischer Strukturen, wie sie für die Konfiguration eines Produktionsablaufs nötig sind, schlecht geeignet. Der Produktionsablauf muss heute in vielen Fällen durch Setzen von Parametern und Verriegelungen konfiguriert werden. Das ist - ausser für Standardfälle - alles andere als einfach und meist auch wenig flexibel. Diese aus Sicht des Kunden mangelnde Flexibilität der Steuerung führt in der Folge dazu, dass oft kundenspezifische Lösungen erstellt werden müssen. Auch für den Bediener der Steuerung ist bei Lösungen des Standes der Technik die Parametrierung in höchstem Masse problematisch, da aufgrund ihrer grossen Anzahl und der zum Teil nicht offensichtlich erkennbaren wechselseitigen Abhängigkeiten die Übersicht verloren geht. Der für den Bediener zentrale Maschinenablauf geht in der Fülle der vorhandenen Parameter unter. Einer der Hauptgründe, warum dieses Parameterkonzept zukünftig nur sehr bedingt als ordnendes Konzept taugt, ist darin zu sehen, dass die damit verbundene Gruppierung der Parameter sich nicht konsequent genug an der tatsächlichen Strukturierung der Maschine orientiert bzw. zu stark auf die gegebenen softwaretechnischen Strukturen ausgerichtet ist. Dies bedeutet, dass jede zusätzliche Funktionalität für Maschinensteuerung in Bezug auf die erforderlichen Anpassungen folgenschwer sein kann, da die Komplexität durch die Vielzahl der Abhängigkeiten überproportional steigt. D.h. neben der effektiven Komplexität der neuen Funktionalität kommt noch eine ungewollte Komplexität hinzu.

Ein zweiter Problemkreis wird in der Einrichtzeit gesehen. Einerseits betrifft dies den Arbeitsaufwand, andererseits aber auch die Produktions-Stillstandszeit während des Einrichtens. Damit die effektive Produktion eines neuen Spritzgiessauftrag in kurzer Zeit optimal und schnell vorbereitet werden kann, darf der Aufwand für die Dateneingabe nicht zu gross sein. Mit steigender Komplexität des Spritzwerkzeuges wird des weiteren das grundsätzliche Problem einer parallelen und synchronisierten Ablaufsteuerung noch mehr akzentuiert.

Die EP 573 912 schlägt ein Verfahren für eine Spritzgiessmaschine, insbesondere für die Konfiguration des Ablaufes vor. Dabei werden dem in einer den Benutzer führenden Form die für den Ablauf eines Spritzzyklus erforderlichen Betriebsparameter über eine Eingabeeinheit in die Datenverarbeitungseinheit eingegeben und gespeichert. Anschliessend werden ein oder mehrere Spritzzyklen gemäss den gespeicherten Betriebsparametern durchgeführt. Als Lösung wird vorgeschlagen:
dass bei der im wesentlichen vor Spritzbeginn erfolgenden Eingabe des Ablaufs und der Konfiguration des Spritzzyklus der physikalisch mögliche als auch der maschinenseitig und werkzeugseitig konstruktiv bedingt mögliche Produktionsablauf berücksichtigt wird, dass die an der jeweiligen Maschine vorhandene oder ihr zugeordnete Einrichtung erfasst und berücksichtigt wird und
dass als Ergebnis dem Benutzer eine selektierte Auswahl an Eingabemöglichkeiten von weiteren, in die bestehenden Teile, auch seitens Maschine und Werkzeug, kompatibel einfügbaren Teilen des Ablaufes zur Verfügung gestellt wird.

Der zentrale Gedanke der EP 573 912 liegt darin, dass konsequent nach folgenden Grundregeln vorgegangen wird:
1. Der Produktionsablauf und der Spritzzyklus werden vom Einrichter konfiguriert.
2. Bereits bei der ersten Eingabe wird ihm von der Steuerung eine selektierte Auswahl an sinnvollen Schritten vorgeschlagen.
3. Jede Eingabe, welche zu Störungen führen kann, z.B. die Eingabe von ungültigen Sollwerten (wie z.B. Drücke, Geschwindigkeiten, Temperaturen. usw.), wird von vornherein von der Steuerung verweigert.
4. Es wird für jeden Fall von der Steuerung eine sinnvolle Eingabe vorgeschlagen.
5. Dem Einrichter wird als Ergebnis eine selektierte Auswahl an akzeptierten Eingaben vorgeschlagen, welche ihm die Arbeit erleichtern und beschleunigen helfen.

Der Steuerung der EP 0 573 912 wird ein Sicherheitskonzept unterlegt, das die Flexibilität der Steuerungsmöglichkeiten einschränkt. Das zur Verfügungsstellen einer selektierten Auswahl an Eingabemöglichkeiten für den Ablauf erhöht zwar die Sicherheit in Bezug auf Fehlkonfigurationen; der Preis, der dafür zu zahlen ist, liegt in einer Einschränkung der Flexibilität bzw. der vollen Ausschöpfung der freien Sequenzierbarkeit. Die EP 0 573 912 löst das eingangs beschriebene Problem der steigenden Komplexität der Steuerung nicht.

Die US-PA 2003 / 0090018 beschreibt eine Lösung für die Programmierung und die Steuerung/Regelung einer Spritzgiessmaschine nach dem Prinzip der Objektorientierung. Es wird dabei von der seit nunmehr über 20 Jahren bekannten Methode (OOprogrammed method) ausgegangen, entsprechend z.B. dem Fachartikel "Object-oriented approach to PLC software design for a manufacture machinery using IEC 61131-3 norm languages"; Advanced intelligent mechatronics, 2001. Proceedings. 2001 IEEE/ASME International conference on 8-12 July 2001, Piscataway, JN, USA, IEEE, Bd. 2, 8. Juli 2001 (2001-07-08), Seiten 787-792, XP010553352; ISBN: 0-7803-6736-7. Speziell wird Bezug genommen auf die aufgeführten Referenzen, z.B. B. Abou-Haider, E. Fernandez und T. Horton, "An object-orineted methodologyn for the desing of control software for flexible manufacturing systems".

Die objektorientierte Programmierung (OOP) ist gemäss "Wikipedia" ein Verfahren zur Strukturierung von Computerprogrammen, bei dem zusammengehörige Daten und die darauf arbeitende Programmlogik zu Einheiten zusammengefasst werden, den sogenannten Objekten. Zumindest konzeptionell arbeitet ein Programm dann nicht mehr (wie bei der prozentualen Programmierung) so, dass sequentiell einzelne Funktionsbereiche eines Algorithmus durchlaufen werden. Es wird eine Anzahl Daten verändert, wobei sich die Programmlogik in der Kommunikation und den internen Zustandsveränderungen der Objekte, aus denen das Programm aufgebaut ist, entfaltet. Vorteile der objektorientierten Programmierung liegen in der besseren Modularisierung des Codes und dadurch bedingt in einer besseren Wartbarkeit und Wiederverwendbarkeit der Einzelmodule sowie in einer höheren Flexibilität des Programms insgesamt, insbesondere in Bezug auf die Benutzerführung. Die Bedienung der Maschine durch den Anwender wird dadurch nur indirekt etwas vereinfacht.

Die WO 93/01703 offenbart ein Verfahren zur Steuerung und Bedienung einer Produktionszelle zur Herstellung von Kunststoff-Spritzgiessteilen, wobei der Produktionsablauf durch den Benutzer vorgegeben und parametriert wird , um die Bedienung und den Betrieb einer Spritzgiessmaschine auf eine einfach erlernbare und durchgängige Art und Weise zu ermöglichen.

Der Fachartikel "Flexible Process Control for Injection Molding Machines Using Java Technology" (Proceedings of the American Control Conference, Anchorage, AK May 8-10, 2002, XP2348429) offenbart eine Einrichtung für das Steuern und Bedienen einer Produktionszelle für die Herstellung von Kunststoff-Spritzteilen mit einer Spritzgiessmaschine mit Rechner- /Speichermitteln, bei der der Produktionsablauf an einer Bedieneinrichtung durch den Benutzer vorgebbar und parametriebar ist, wobei die Rechner-/Speichermittel ausgebildet sind zur Aufnahme einer Wissensbasis, wobei an der Bedieneinrichtung ein Abbild von wenigstens einem Teil der an der jeweiligen Produktionszelle vorhandenen oder ihr zugeordnete Einrichtungen erzeugbar ist, so dass die Bedienung und der Betrieb einer Produktionszelle auf eine einfache und durchgängige Art und Weise ermöglicht wird.

Der Erfindung wurde nun die Aufgabe gestellt, Lösungen zu suchen, welche eine volle Ausschöpfung der Flexibilität erlauben und eine einfach zu erlernende Bedienung der Maschine, insbesondere der Konfiguration der Maschinenabläufe und der Parametrierung bietet, und das Problem der ungewollten Komplexität vermeidet.

### Darstellung der Erfindung

Das erfindungsgemässe Verfahren ist dadurch gekennzeichnet, dass Maschinenabläufe auf der Basis von verhaltensvollständigen Komponenten, die zusammen ein Domänenmodell bilden, mit Hilfe einer Domänensprache erstellt, verwaltet und ausgeführt werden, um die Bedienung und den Betrieb einer Spritzgiessmaschine auf eine einfach erlernbare und durchgängige Art und Weise zu ermöglichen, wobei für jeden beliebigen Umbau der ganzen Steuerung die verhaltensvollständigen Komponenten ersetzt und ausgetauscht werden können.

Die erfindungsgemässe Einrichtung ist dadurch gekennzeichnet, dass die Rechner-/ Speichermittel ausgebildet sind zur Aufnahme einer dezentral organisierten Wissensbasis, wobei an der Bedieneinrichtung ein Abbild von wenigstens einem Teil der an der jeweiligen Produktionszelle vorhandenen oder ihr zugeordnete Einrichtungen in einem Domänenmodell in Form der Komponenten erzeugbar und entsprechend bedienbar ist, so dass der Betrieb einer Produktionszelle auf eine einfache und durchgängige Art und Weise erlernbar ist, wobei für jeden beliebigen Umbau der ganzen Steuerung die verhaltensvollständigen Komponenten ersetzbar und austauschbar sind.

Eine besonders bevorzugte Ausgestaltung des Verfahrens ist **dadurch gekennzeichnet, dass** die Steuerung, Programmierung und Konfiguration auf der Basis einer komponentenorientierten Domänensprache zur Modellierung von zyklischen und/oder nichtzyklischen Maschinenabläufen, ausgehend von einer Repräsentation der Maschine, als geordnete Sammlung von Komponenten erfolgt, wobei der Produktionsablauf konfiguriert bzw. programmiert wird.

Eine besonders bevorzugte Ausgestaltung der Einrichtung ist **dadurch gekennzeichnet, dass** die Steuerung, Programmierung und Konfiguration über die Bedieneinrichtung auf der Basis einer komponentenorientierten Domänensprache zur Modellierung von zyklischen und/oder nichtzyklischen Maschinenabläufen ausgehend von einer Repräsentation der Maschine als geordnete Sammlung von Komponenten durchführbar ist, und die Rechner-/Speichermittel ausgebildet sind zur Aufnahme einer dezentral organisierten Wissensbasis für die Komponenten.

Von den Erfindern sind mehrere Sachverhalte erkannt und für die neue Erfindung berücksichtigt worden: Ein erster grundsätzlicher Sachverhalt in dem Bereich der Steuerung einer Produktionszelle zur Herstellung von Kunststoff-Spritzteilen liegt darin, dass sich
a) der Ablauf nach den speziellen Erfordernissen der Produktionsmittel richtet. Dieser ändert von Werkzeug zu Werkzeug und z.B. je nach Automatisierungsgrad der Produktion.
b) die Betriebsparameter von Spritzgiessauftrag zu Spritzgiessauftrag ändern, z.B. auf Grund eines anderen Werkzeuges, einer anderen Peripherie oder eines anderen Kunststoffes.

Der zweite grundsätzliche Sachverhalt liegt darin,
a) wie die Steuerphilosophie hard- und softwaremässig konzipiert ist (z.B. zentral oder dezentral) und
b) die Art und Weise, wie an der Steuerung die frei wählbaren Abläufe und Parameter am Bedienerterminal eingegeben werden:

Der dritte, grundsätzliche Sachverhalt liegt in der Verwendung eines Domänenmodelles, welches als Komponentenmodell ausgebildet wird. Dabei werden die Komponenten verhaltens-vollständig ausgebildet. Ein Domänenmodell beschreibt das Wissen über ein bestimmtes Anwendungsfeld im Problemraum, d.h. es werden alle für das Verständnis des Problems notwendigen fachlich relevanten Sachverhalte in einem Modell zusammengefasst. Die Darstellung der Elemente der Domäne und deren Beziehungen (z.B. in Form eines Klassendiagramms gemäss der UML) bildet den Kern eines Domänenmodells. Im Gegensatz dazu ist die objektorientierte Programmierung ein Programmierkonzept, das primär dem Hersteller einer Spritzgiessmaschine Vorteile bietet, jedoch an sich keinen direkten Einfluss auf die Bedienung hat.

Das der Benutzerschnittstelle zugrunde gelegte konzeptionelle Modell beschreibt ein System von untereinander verbundenen Objekten. Diese Objekte formen die Basis für das mentale Modell seiner Anwender. Jedes Objekt beschreibt dabei eine manipulierbare Einheit, die zur direkten Benutzung in der Benutzerschnittstelle angeboten werden. Jedes Objekt ist dabei bezogen auf die Dinge, die man mit ihm tun kann, vollständig. D.h. es kann vom Anwender verstanden und verwendet werden. Die Benutzerschnittselle erweitert dabei die Semantik des Objektes nicht, sondern stellt das Objekt mit seinen Möglichkeiten lediglich dar und erlaubt dessen Manipulation. Verhaltensvollständig betrifft in der Praxis vor allem die Bedienung. Verhaltensvollständige Komponenten sind Objekte, die zur Bedienung direkt verwendbar sind und bieten alles zur Darstellung und Manipulation derselben.

Die Verhaltensvollständigkeit ist die Basis für eine leichterlernbare Benutzerschnittstelle, die bezogen auf die zu lösende Aufgabe nach kurzer Eingewöhnungszeit in den Hintergrund tritt. Die Verhaltensvollständigkeit ist die notwendige Vorbedingung für die Umsetzung eines Interaktionsstils auf der Basis direkt manipulierbarer Objekte. Hierbei handelt es sich um die konsequente Fortsetzung der kontext-sensitiven Bedienung; der Kontext eröffnet die zur Verfügung stehenden Aktionen ausnahmslos auf der Basis des zu manipulierende Objekts. Dieser Interaktionsstil "Objekt wählen und manipulieren" ist einfach zu verstehen und anzuwenden; er erfordert nur einen sehr geringen Lernaufwand und unterstützt zudem die vorgenannte Forderung in idealer Weise, wonach die Benutzerschnittstelle in den Hintergrund treten soll.

Im Zentrum der neuen Erfindung steht das Komponentenmodell. Dieses kommt in mehrfachem Sinne zur Anwendung, einerseits im Verfahren und andererseits in der Vorrichtung, wobei in der Steuerung jede physikalisch vorhandene und erfasste Komponente virtuell abgebildet wird.

Ein ganz wesentlicher Vorteil der neuen Erfindung liegt darin, dass
der Bediener seine Eingaben komponenten- und kommandoorientiert macht und
dass der Benutzer die Konfiguration des Produktionsablaufes mit der grösstmög-lichen Freiheit erstellt und die Parametrierung wesentlich erleichtert wird, ferner dass danach die Steuerung der Produktionszelle komponentenorientiert erfolgt.

Der Nutzen der neuen Erfindung für den Anwender ergibt sich bereits, wenn wenigstens die wichtigsten Komponenten vor allem diejenigen, welche den Spritzgiessablauf direkt beeinflussen, komponentenorientiert behandelt werden. Welche zusätzlichen Einrichtungen als Komponenten behandelt werden, hängt stark auch von der Bedeutung der betreffenden Funktion im Gesamtablauf sowie deren Automatisierungsgrad ab.

Im Stande der Technik wurde entweder die Parametrierung oder die Konfiguration des Produktionsablaufes in den Vordergrund gestellt. In beiden Fällen konnte weder die Frage der Komplexität der Steuerung noch der uneingeschränkten Optimierung des Produktionsablaufes, im Hinblick auf eine wirklich freie Programmierung durch den Benutzer, gelöst werden. Es muss unterschieden werden zwischen Spritzgiessmaschinen, mit denen jahraus jahrein die selben Spritzteile hergestellt werden und solchen, bei denen die Werkzeuge auftragsbezogen häufig gewechselt werden müssen. In beiden Fällen bringt das erfindungsgemässe Konzept der komponentenorientierten Steuerung grosse Vorteile, sei es für den Spritzgiessmaschinen-Hersteller oder die Benutzer der Maschine. Für die Anmelderin bedeutet die Umstellung von dem bisherigen Steuerkonzept auf die Komponentensteuerung einen enormen Arbeitsaufwand in der Grössenordnung von 20 bis 30 Mannjahren.

Das Konzept des Komponentenmodells für die frei programmierbare Ablaufsteuerung beruht auf einem eingängigen und leicht verständlichen Systemmodell. Die Maschine setzt sich aus Komponenten zusammen, die mit Hilfe eines Ablaufes gesteuert werden. Dieses Konzept ersetzt das bisherige gängige Parameterkonzept und schafft die Basis, um auch anspruchsvolle Steuerungsabläufe mit Hilfe einer frei programmierbaren Ablaufsteuerung umzusetzen. Der Ersatz der heutigen, auf Parametern aufbauenden Maschinensteuerung durch ein komponentenorientiertes System, das es dem Benutzer erlaubt, die Maschine auf der Basis des Maschinenablaufs zu steuern und zu überwachen, bringt eine drastische Vereinfachung in der Bedienung. Das Komponentenmodell bietet hierbei die ideale Voraussetzung für die Schaffung eines Systems, das den Benutzer befähigt, anstehende Aufgaben zielgerichtet und effizient zu erfüllten, getreu nach dem Grundsatz: "Einfaches soll einfach sein. Schwieriges möglich."

Die neue Lösung gemäss Ansprüchen 1 sowie 30 betrifft im wesentlichen die Steuerungsarchitektur sowie den Steuerungsablauf in Bezug auf den Benutzer. Hier ist ein wesentlicher Gesichtspunkt die Ersetzbarkeit von Komponenten, sei es auf der Ebene der virtuellen Komponente oder der Maschinenbaukomponenten. Ein Beispiel dazu ist der Wechsel von einem hydraulischen zu einem elektrischen Antrieb, sei es für einzelne oder alle Achsen. Ein ganz entscheidender Vorteil der neuen Lösung liegt darin, dass mit dem Komponentenmodell jeder beliebige Umbau der ganzen Steuerung wesentlich vereinfacht wird, da Komponenten untereinander nur lose gekoppelt sind und dadurch einfach ausgetauscht werden können. Dies bedeutet, dass die ganze Steuerung sowohl für den Hersteller wie auch den Anwender in der Gegenwart und der Zukunft enorme Vorteile und Erleichterungen bietet. Jede Weiterentwicklung im Bereich der Produktionszelle kann maschinenbaulich, verfahrenstechnisch und steuertechnisch komponentenorientiert durchgeführt werden, ohne dass dadurch die Komplexität der Steuerung überproportional zunimmt.

Eine Komponente beschreibt vor allem eine mechanische Baugruppe der Spritzgiessmaschine. Die Maschine kann so als Verbund von Komponenten betrachtet werden. Diese Form der Strukturierung lässt sich in der Steuerungssoftware fortsetzen, wo jede Hardware-Komponente ein Abbild als Software-Komponente findet. Auch logische Komponenten, die beispielsweise verfahrenstechnisches Wissen einfangen bzw. kapseln oder auch Timer-Komponenten lassen sich so einfach realisieren. Das Komponentenkonzept ist auch für den Einrichter bzw. den Benutzer leicht zu verstehen.

Unter Komponente werden konkrete Baugruppen oder Module verstanden, beispielsweise:
- Spritzachse und / oder
- Plastifizierachse und / oder
- Spritzaggregat und / oder
- Formschlussachse und / oder
- Formachse und / oder
- Formdrehteller und / oder
- Kernzüge und / oder
- Schieber und / oder
- Ausstosserachse und /oder
- Entnahmerobotik und / oder
- Säulenverstellachse und / oder
- Wärme- und Kühleinheit und / oder
- Hydraulikaggregat (wenn vorhanden) und / oder
- elektronische Bauelemente und Baugruppen sowie Sensorikmittel und / oder
- Materialzuführungs- und / oder Spritzteilehandling und / oder
- das Spritzteil.

Eine Komponente kann jedoch auch jedes beliebige Element der Produktionszelle sowohl auf logischer als auch auf physikalischer Ebene einschliesslich der dieser möglicherweise zugeordneten Peripheriegeräte verkörpern.

Gemäss einem weiteren besonders vorteilhaften Ausgestalturlgsgedanken kann für jeden Problemraum in der Steuerung auf der Basis eines schlüssigen Domänemodells und mit Hilfe von fachspezifischen Domänesprachen die Lösung auf fachlicher Ebene beschrieben werden und der Programmcode für die technische Umsetzung daraus automatisch generiert werden.

Die neue Lösung gemäss Anspruch 2 und 36 betrifft im wesentlichen die sogenannte frei programmierbare Ablaufsteuerung (FPA) für das Erstellung, Testen, Optimieren und Überwachen von Maschinenabläufen bei der Herstellung von Spritzteilen, unterstützt durch eine Domänensprache. Die erfindungsgemässe Ablaufsteuerung soll helfen, die Reaktionszeit auf Kundenbedürfnisse markant zu reduzieren und dabei insbesondere die heute noch nötigen aufwendigen kundenspezifischen Sonderprogramme soweit wie möglich zu eliminieren.

Für den Benutzer ergeben sich drei Situationen:
1. Im Falle eines neuen Spritzauftrages mit einem bestehenden Werkzeug wird beim Einrichten des Werkzeuges der gespeicherte Datensatz erneut in die Steuerung geladen. Es spielt dabei keine Rolle, ob die Datensätze auf einem externen Datenträger, beispielsweise Diskette, Memory Stick, oder Leitrechner oder in der Steuerung gespeichert sind. Hier ist beim Einrichten des Werkzeuges keine Programmierung erforderlich. Die Steuerung erfolgt auf der Basis des Komponentenmodells.
2. Im Falle eines neuen Auftrages mit einem neuen Werkzeug muss beim Einrichten der Produktionsablauf und die Parametrierung neu erstellt werden. Die Erstellung erfolgt dabei komponentenorientiert.
3. Im Falle von blossen Änderungen, beispielsweise mit einem vorhandenen Werkzeug, ergibt sich eine Lösung zwischen 1 und 2.

Für besonders vorteilhafte Ausgestaltungen wird auf die Ansprüche 3 bis 29 sowie 31 bis 35 und 37 bis 39 Bezug genommen.

Gemäss einer besonders vorteilhaften Ausgestaltung der neuen Lösung wird der Komponente ein Komponentenwissen zugeordnet. Dies gestattet die Nutzung einer maximalen freien Programmierung, da die Komponente selbst das wesentliche Organisationskonzept stellt. Die Steuerung erfolgt wenigstens für ein Teil der an der jeweiligen Produktionszelle vorhandenen oder ihr zugeordneten Einrichtungen komponentenorientiert. Vorteilhafteniveise enthält bzw. kapselt jede der erfassten Komponenten relevantes verfahrenstechnisches, mechanisches und weiteres relevantes Wissen, um im Verbund mit anderen Komponenten die jeweils in einem Ablauf benötigten Funktionen in Form von Kommandos geordnet zur Verfügung zu stellen. Im Weiteren enthält bzw. kapselt jede der erfassten Komponenten relevantes verfahrenstechnisches, mechanisches und weiteres relevantes Wissen, um für einen Schutz des durch die Komponente repräsentierten Maschinenteiles zu sorgen.

Die im Produktionsablauf erforderlichen Betriebsparameter werden mittels einer diese Betriebsparameter speichernden Datenverarbeitungseinheit vom Benutzer eingespielt, wobei von der Steuerung sowohl das physikalisch als auch das maschinenseitig und werkzeugseitig konstruktiv bedingt Mögliche berücksichtigt wird. Die Plausibilität des Ablaufs wird vor der ersten Ausführung überprüft.. Bei der Parametrierung des Ablaufs werden nur gültige Werte angenommen.

Jede Komponente stellt Steuerkommandos in Form einer Kommandoschnittstelle zur Verfügung und weist eine Ereignisschnittstelle auf, wobei die Komponenten über die Kommandoschnittstelle manipuliert werden, um gegebenenfalls ein oder weitere Kommandos auf weiteren mit dieser Komponente zusammenarbeitenden Komponenten auszulösen. Zustandsänderungen bei Komponenten können in Form von Ereignissen über die Ereignisschnittstelle abonniert und als Basis für Synchronisationen direkt zwischen den Komponenten sowie als Synchronisationsquellen zur Beeinflussung des Produktionsablaufs verwendet werden. Komponenten bieten in ihrer Ereignisschnittstelle Ereignisquellen und -senken an: Ereignisquellen sind dabei Ereignisse, die von anderen Komponenten abonniert werden können; beispielsweise bietet der Formschluss die Ereignisse "Form offen" oder Form verriegelt" an. Ereignissenken werden benötigt, um auf Ereignisse im System reagieren zu können, die asynchron zu einem Maschinenablauf auftreten, z.B. das Drücken der Stopp-Taste. Auf diese Weise können beliebige Abläufe im Bereich der Produktionszelle auf der Basis des Komponentenmodells erstellt und von der Steuerung ausgeführt werden. Ausgehend von einer Repräsentation der Produktionszelle als geordnete Sammlung von Komponenten, können zyklische und / oder nichtzyklische Abläufe frei programmiert und ausgeführt werden.

Gemäss einer weiteren Ausgestaltung wird das Spritzteil im Sinne der Objektorientierung als virtuelle Komponente behandelt. Dabei können die Kennwerte des Fertigungsprozesses, der Fertigungsgrad oder beliebiger anderer Status des Spitzteils, in diesem gespeichert und zur Beeinflussung des Spritzgiessablaufes genutzt werden, beispielsweise für die Steuerung einer Ausschussweiche.

Eine ganz besonders vorteilhafte Ausgestaltung der Lösung liegt darin, dass für jeden Problemraum in der Steuerung eine Domänensprache eingesetzt wird, um Lösungen zu beschreiben und daraus den Programmcode automatisch zu generieren.

Gemäss einer weiteren vorteilhaften Ausgestaltung des Verfahrens werden, ausgehend von einer Repräsentation der Produktionszelle als geordnete Sammlung von Komponenten, auf der Bedieneroberfläche Abläufe auf der Basis der Komponenten und ihrer Kommandos, frei programmiert und zu Ausführung gebracht. Die neue Lösung gestattet auf der Basis des Komponentenmodells die Erstellung und Ausführung beliebiger zyklischer und / oder nichtzyklischer Abläufe im Bereich der Produktionszelle.

Der Produktionsablauf, insbesondere der Spritzzyklus basiert auf den Kommandos der physikalisch vorhandenen Komponenten und wird interaktiv erstellt, wobei dies folgende Schritte auf der Stufe der Programmierung umfasst:
a) die Steuerung bietet alle physikalisch vorhandenen Komponenten zur Auswahl an;
b) der Benutzer wählt im Sinne einer Vorauswahl die für den Ablauf benötigten Komponenten aus;
c) der Benutzer selektiert ein Kommando oder eine Ereignisquelle einer Komponente und fügt das Kommando oder die Ereignisquelle in den Ablauf ein;
d) Speichern dieser Eingabe in der Datenverarbeitungseinheit;
e) Wiederholen der Schritte c) bis d), bis der Ablauf vollständig ist;
   wobei die Parametrierung der Kommandos, Ereignisquellen und Komponenten die folgenden Schritte umfasst:
f) Selektion eines Kommandos oder einer Ereignisquelle im Ablauf bzw. einer verwendeten Komponente,
g) Anzeigen der zugehörigen Parameter,
h) Eingabe der Parameter,
i) Speichern dieser Eingabe in der Datenverarbeitungseinheit;
j) Wiederholen der Schritte f) bis i), bis alle Kommandos und Ereignisquellen im Ablauf bzw. alle verwendeten Komponenten parametriert sind,
wobei die Schritte f) bis i) nach oder während der Erstellung des Ablauf durchgeführt werden können, bis alle im Ablauf verwendeten Kommandos, Ereignisquellen und Komponenten parametriert sind.

Der Einrichter konfiguriert als erstes auf einer Eingabemaske den Spritzzyklus interaktiv und spielt die Betriebsparameter kommando- und komponentenorientiert ein. Bevorzugt wird aus der geordneten Sammlung von Komponenten auf der Eingabemaske eine Vorauswahl an Komponenten getroffen und / oder angeboten, welche für den konkreten Ablauf benötigt werden. Alle funktionswichtigen an einer jeweiligen Produktionszelle vorhandenen bzw. ihr zugeordneten Einrichtungen, wie beispielsweise Peripheriegeräte und Werkzeug, werden komponentenorientiert interaktiv konfiguriert und in den Produktionsablauf integriert. Vor Start der Produktion werden über die Eingabemaske die Maschinenabläufe interaktiv graphisch konfiguriert und die Betriebsparameter kommando- und komponentenorientiert eingespielt.

Gemäss einer weiteren vorteilhaften Ausgestaltung weist die Steuervorrichtung eine Eingabemaske auf, enthaltend eine Ablaufliste, ein Ablaufdarstellungsfeld, eine Komponentenliste mit auswählbaren Kommandos sowie ferner ein Parametrierfeld, wobei der Bediener den Ablauf im Ablaufdarstellungsfeld erstellt und die im Ablauf verwendeten Komponenten und Kommandos im Parametrierfeld parametriert. Ein entscheidender Vorteil der neuen Lösung liegt darin, dass Abläufe völlig frei programmiert werden können. Aufgrund des Komponentenwissens werden beim Einfügen eines Kommandos im Ablaufdarstellungsfeld automatisch für die zwingend notwendigen Folgeschritte weitere Kommandos als Leerstellen in den Ablauf eingefügt. Der Benutzer füllt die Leerstellen durch konkrete passende Kommandos der betroffenen Komponenten.

Der Anwender hat die freie Wahl für jeden Ablaufschritt. Im Unterschied zu der eingangs beschriebenen EP 0 573 912 wird dem Einrichter gemäss der neuen Lösung nicht eine begrenzte Auswahl angeboten, sondern er erhält vielmehr den ganzen Baukasten an Möglichkeiten zur freien Auswahl. Hat er einmal ein Kommando festgelegt, fordert die Steuerung den Einrichter auf, die Folgeschritte gemäss dem Komponentenwissen ebenso festzulegen, d.h. die automatisch eingefügten Leerstellen durch konkrete Kommandos der betroffenen Komponenten aus der Komponentenliste der Eingabemaske zu füllen.

Nur in Abläufen verwendete Komponenten und Kommandos müssen parametriert werden. So wird auf einfache und übersichtliche Art die in der Steuerung installierte Mannigfaltigkeit auf das Wesentliche reduziert. Die Frage nach den zwingend notwendigen Eingaben, damit der Produktionsablauf gestartet werden kann, stellt sich nicht mehr. Für die Parametrierung der Komponenten und deren Kommandos werden nur Werte angenommen werden, welche innerhalb eines zulässigen Bereiches liegen. Der Status der Parametrierung der in einem Ablauf verwendeten Komponenten und Kommandos wird visualisiert, indem alle unvollständig parametrierten Kommandos und Komponenten z.B. farblich markiert werden. In der gleichen Art werden in der Liste der vorhandenen Abläufe diejenigen farblich markiert, die nicht vollständig sind (d.h. der Ablauf enthält noch Leerstellen) oder Komponenten und Kommandos beinhaltet, die nicht vollständig parametriert sind. Im Weiteren besteht die Möglichkeit bestehende Abläufe als Makro in anderen Abläufen zu verwenden. Dazu kann der bestehende Ablauf wie ein Kommando als Makro in einen weitern Ablauf eingefügt werden. Das Makro kann expandiert werden, um z.B. die Parametrierung anzupassen. Für alle erfolgreich erstellten und ausgeführten Produktionsabläufe wird der ermittelte optimale Datensatz gespeichert. Dieser kann für den gleichen oder ähnliche Produktionsabläufe vom Benutzer erneut geladen werden.

Ein ganz besonders vorteilhafter Ausgestaltungsgedanke liegt darin, dass parallele Abläufe miteinander synchronisiert werden.

Ein weiterer wichtiger Aspekt liegt darin, dass für das Einrichten jeder neuen Komponente, insbesondere eines neuen Spritzgiesswerkzeuges, die erforderlichen Daten am Bedienerterminal komponentenorientiert eingegeben werden. Sehr vorteilhaft ist, dass für das Einrichten einer neuen Komponente, insbesondere eines neuen Werkzeuges, die spezifischen Prozessdaten am Bedienerterminal aufgrund eines Datenblattes eingegeben oder in elektronischer Form geladen werden können. Dem Benutzer können für das Einrichten eines völlig neuen Arbeitsauftrages mit neuem Werkzeug mehrere Möglichkeiten angeboten werden, damit der Produktionsäblauf am Bedienerterminal sofort in optimierter Form eingebbar ist. Es können beispielsweise Vorlagen für typische Produktionsabläufe angeboten und diese den Benutzer ergänzt oder abgeändert werden.

Die neue Lösung gestattet, dass sowohl für die Ablaufkonfiguration wie auch für die Parametrierung dem Einrichter ein Expertensystem (z.B. als Assistent) zur Verfügung gestellt wird.

Ein weiterer sehr vorteilhafter Erfindungsgedanke liegt darin, dass auf der Basis der Komponentenidee eine griffige Domänensprache, die "Process Application Language", geschaffen wurde, mit deren Hilfe praktisch beliebig komplexe Abläufe für Spritzgiessmaschinen bzw. Produktionszellen auf einfache und leicht erlernbare Art und Weise modelliert werden können. Eine Domänensprache ist eine formale aber stark vereinfachte Sprache zur Beschreibung eines Sachverhaltes in einem Probiernbereich. Die Domänensprache umfasst eine kleine Anzahl Wörter und kann textuell oder graphisch visualisiert werden.

Die Steuerung ist gemäss der neuen Lösung ein reaktives ereignisgetriebenes System. Das heisst, es reagiert nur auf Ereignisse. Es gibt z.B. keine Stätusabfragen (Polling). Wenn sich die Komponente A für den Status der Komponente B interessiert, abonniert die Komponente A das entsprechende Ereignis der Komponente B, welches bei einer Statusänderung ausgelöst wird. Mit diesem Prinzip wird die Kommunikation in der Steuerung auf ein Minimum beschränkt.

Die einzelnen Achsen der Spritzgiessmaschine haben einen zyklischen Ablauf und bilden zusammen den Spritzzyklus. Die Achsen sind zwar miteinander synchronisiert, damit keine Achse "davonläuft", aber sie haben keinen gemeinsamen Synchronisationspunkt, z.B. einen gemeinsamen Start-/Endpunkt.

Die Visualisierung und Bedienung der Spritzgiessmaschine beruht auf verhaltensvollständigen Objekten. Objekte bzw. Komponenten sind verhaltensvollständig, wenn sämtliche Funktionalitäten als Verhalten bzw. Methoden an den Objekten realisiert werden. Solche Objekte können direkt und automatisiert visualisiert werden (vollständig generische Visualisierung).

Im Fertigungsablauf durchläuft das Spritzteil verschiedene Fertigungsstufen. Der Ablauf, in dem das Spritzteil die Fertigungsstufen durchläuft, wird als Teilezyklus bezeichnet. Der Teilezyklus kann in den Produktionsablauf integriert werden, wobei der Produktionsablauf den Teilezyklus treibt. Der Teile- und der Maschinenzyklus müssen dabei nicht zwingend identisch sein. Ein virtuelles Spritzteil durchläuft die verschiedenen Fertigungsstufen und kann dabei Informationen sammeln, die wiederum Einfluss auf den Produktionsablauf haben können. Beispielsweise sammelt das virtuelle Spritzteil die Qualitätsdaten und weiss daher jederzeit, ob es noch ein Gutteil ist oder nicht. Mit dieser Information lässt sich dann beispielsweise die Ausschussweiche steuern.

Gemäss einer weiteren vorteilhaften Ausgestaltung wird vorgeschlagen, dass eine Einzelkomponente ein beliebiges Element der Spritzgiessmaschine oder der ihr zugeordneten Einrichtungen und Peripheriegeräte repräsentiert, beispielsweise Formschluss, Aggregat, Kemzug, Handlinggerät. Es können auch rein logische Komponenten als Einzelkomponenten behandelt werden. Jede der berücksichtigten Komponenten weist eine Ereignisschnittstelle sowie eine Kommandoschnittstelle auf und verfügt über je ein eigenes Komponentenwissen.

Bevorzugt basiert die Steuerung auf einer geordneten Sammlung von virtuellen, die Baugruppen der Produktionszelle repräsentierenden Komponenten, mit je zugeordneter Wissensbasis, wobei die Produktionszelle komponentenorientiert steuerbar und der Produktionsablauf mittels der Kommandos entsprechend dem konfigurierten Ablauf getrieben wird. Jede Komponente enthält relevantes verfahrenstechnisches, mechanisches und weiteres relevantes Wissen, um für einen Schutz des durch die Komponente repräsentierten Maschinenteiles zu sorgen.

Bevorzugt weist die Bedieneroberfläche eine Eingabemaske auf, enthaltend eine Ablaufliste und ein Ablaufdarstellungsfeld, eine Komponentenliste mit auswählbaren Kommandos, ferner ein Parametrierfeld.

Der Werkzeugablauf sowie dessen Parametrierung können z.B. aufgrund eines Datenblattes eingegeben oder in elektronischer Form geladen werden, wobei diese Daten in der Regel vom Werkzeugbauer vorgegeben werden. Die neue Lösung gestattet das Einrichten eines Werkzeuges in einer neuen Arbeitsteilung durchzuführen.

Die Modellierung des Ablaufes und die Eingabe der Kommandos sowie die Parametrierung kann als Teil der Arbeitsvorbereitung in einem von der Fabrikation getrennten Raum durchgeführt und auf die Maschinensteuerung übermittelt werden. Der Einrichter an der Maschine kann sich auf das mechanische Einrichten sowie die Ablauffunktion und eine allfällige Optimierung konzentrieren.

Die neue Lösung betrifft im Wesentlichen die so genannte freiprogrammierbare Ablaufsteuerung (FPA) für die Erstellung, das Testen und die Überwachung und Steuerung von Produktionsabläufen einer Spritzgiessmaschine. Die freiprogrammierbare Ablaufsteuerung soll helfen, die Reaktionszeit auf Kundenbedürfnisse markant zu reduzieren und dabei insbesondere die heute nötigen kundenspezifischen Sonderprogramme soweit wie möglich zu eliminieren.

Zum besseren Verständnis werden die nachfolgenden Begriffe definiert.

Ablaufstrang: Unter Ablaufstrang versteht man eine Sequenz von Kommandos, die nacheinander ausgeführt werden. Es können gleichzeitig mehrere Ablaufsträge nebeneinander (zeitlich parallel) ausgeführt werden. Parallele Ablaufstränge können miteinander synchronisiert werden.

Basisbibliothek (BB): Die Basisbibliothek stellt der Ablaufsteuerung allgemeine Basisfunktionen, den Zugriff auf das Betriebssystem und auf die Hardware zur Verfügung. Sie entkoppelt damit die Ablaufsteuerung von der Hardware und vom Betriebssystem.

Eine Domänensprache ist eine formale aber stark vereinfachte Sprache zur Beschreibung eines Sachverhaltes in einem Problemraum. Eine Domänensprache hat gegenüber einer allgemeine Programmiersprache (General Purpose Language) den Vorteil, dass sie viel näher am Problem ist, welches gelöst werden soll und damit Programme (Quellcode) viel kürzer und aussagekräftiger werden. Der konsequente Einsatz von Domänensprachen kann viel dazu beitragen, die Komplexität im Griff zu behalten. Dies ist ein ganz besonders vorteilhafter Ausgestaltungsgedanke der vorliegenden Lösung. Die Domänensprache umfasst wohldefinierte, dem fachlichen Problem angemessene Anzahl Wörter, z.B. "cycle", "scopes", "task", "sequence", "waitFor", "command".

Um die freiprogrammierbaren Abläufe abbilden zu können, wurde auf der Basis der Komponentenidee eine griffige Domänensprache - die Process Application Language - geschaffen, mit deren Hilfe praktisch beliebig komplexe Abläufe für Spritzgiessmaschinen auf einfache und leicht erlernbare Art und Weise modelliert werden können. Die Process Application Language erfüllt dabei einen doppelten Zweck: Sie dient einerseits dazu; die heute verfügbaren Grundabläufe auch im neuen System von Beginn weg uneingeschränkt anbieten zu können. Gleichzeitig ist sie aber auch die Grundlage für die Beschreibung der freiprogrammierbaren Maschinenabläufe und damit der freiprogrammierbare Ablaufsteuerung. Die Process Application Language bildet die logische Fortsetzung des Komponentenmodells und sorgt so dafür, dass das neue Bedienkonzept, auf dessen Basis die freiprogrammierbare Ablaufsteuerung umgesetzt wird, einfach bleibt und damit dem Bediener ein durchgängiges, effizientes und sicheres Arbeiten mit einer Spritzgiessmaschine erlaubt. Die komponentenorientierte Domänensprache (Process Application Language) dient der Modellierung von zyklischen und/oder nicht-zyklischen Maschinenabläufen inklusive sämtlicher bei Bedarf notwendigen Ablaufschritte in Form von Befehlen für das Auslösen von Komponentenkommandos für die Produktionsvorbereitung und/oder den Produktionsabschluss und bietet hierzu auch Unterstützung für ereignisbasierte Synchronisationen und zyklusübergreifende Kommandos. Die Process Application Language bietet neben einer vollständigen Unterstützung für die parallele Ausführung von Ablaufsequenzen auch Befehle für
- das Auslösen von Kommandos von Komponenten inklusive der dazu nötigen Kommandoargumente,
- das Signalisieren von Zuständen,
- das Warten auf das Signalisieren von Zuständen,
- das Setzen von Bedingungen für die Ausführung bestimmter Ablaufzweige,
- das Gruppieren von Ablaufsequenzen zu einem Zyklus und
- das Bilden von Namensräumen.

Des Weiteren bietet diese Sprache die Möglichkeit, Informationen über das mit Hilfe des modellierten Maschineablaufs zu fertigende Werkstück als Synchronisations- und. Entscheidungsquelle zur Beeinflussung des Ablaufes zu verwenden und dabei aus allen verfügbaren Statusinformationen die relevanten Informationen bedarfsgerecht - wenn nötig auch zyklusübergreifend - zu speichern. In der Steuerungssoftware müssen sowohl fachdomänenspezifische als auch technische Probleme gelöst werden. Eine gute Softwarearchitektur sorgt für eine klare Trennung zwischen Belangen der Fachdomäne und den softwaretechnischen Erfordernissen. Diese Trennung ist enorm wichtig! Fehlt sie, dann besteht die Gefahr, dass die Software entlang der technischen Erfordernisse entwerfen und umgesetzt wird und die eigentlichen fachlichen Probleme in den Hintergrund treten. Ohne ein aussagekräftiges und leicht verständliches Domänenmodell verkommt Software rasch zu einer technischen Lösung, die mit den Anforderungen meist früher als später nicht mehr mithalten kann. Denn mehr und mehr wird die Lösungsfindung von technischen Fragen und Problemen dominiert, die nichts mit dem ursprünglichen fachlichen Problem zu tun haben. Ganz anders, wenn die Gestaltung und Umsetzung der Software auf der Basis eines Anwendungsmodells erfolgt, das die Fachdomäne ins Zentrum der Betrachtungen rückt und sich konzeptionell wie sprachlich klar an dieser orientiert. Ein solches Domänenmodell, das von Anwendern und Entwicklern gleichermassen verstanden werden kann, bildet die Basis für eine reiche und nutzbringende Kommunikation zwischen Fachvertretern und Softwarentwicklern.

Eine Domänensprache dient anders als eine sogenannte General Purpose Language (GPL) einem und nur einem spezifischen Zweck. Das heisst eine solche Sprache orientiert sich kompromisslos an der jeweiligen Problemstellung und verwirklicht die Konzepte des jeweiligen Anwendungsgebiets direkt mit Hilfe von entsprechenden Sprachkonstrukten auf der Basis einer Syntax, die auf Einfachheit und Ausdrucksstärke ausgelegte ist; die Domänensprache - Englisch Domain Language (DL) oder Domain Specific Language (DSL) genannt - wird so zur Grundlage für domänengetriebenen Entwurf, bei dem die zwar wichtigen letztlich aber dömänenfremden technischen Details zugunsten der zu lösenden fachlichen Probleme vollständig in den Hintergrund treten können. Damit werden die Voraussetzungen geschaffen für eine Form der modellgetriebenen Anwendungsentwicklung, bei welcher die eigentlichen Absichten der Lösung klar und unmissverständlich formuliert und von Fachspezialisten auch jederzeit nachvollzogen und verstanden werden können.

Aus technischer Sicht handelt es sich bei einer Domänensprache um eine höherwertige Abstraktion, da sie von technischen Details einer GPL vollständig unberührt bleibt. Beispielsweise können in einer Domänensprache Schleifenverarbeitung oder Nebenläufigkeit so eingefasst werden, dass die technischen Belange einer Lösung in einer bestimmten GPL vollständig verborgen bleiben. Indem wir technische Belange, die im Kontext der fachlichen Problemstellung unwesentlich sind, bewusst ignorieren, indem wir also selektiv ignorant sind, erreichen wir durch die domänenbezogene Konkretisierung eine Vereinfachung in Bezug auf die Lösungsfindung und Beschreibung auf Anwendungsebene. Damit bildet der Einsatz einer Domänensprache den nächsten logischen Schritt auf dem Weg hin zu höherwertigen Abstraktionen, die es uns erlauben, die oft hässlichen technischen Details der Funktionsweise von Informationstechnik zunehmend zu ignorieren. Mit Hilfe der GPL wird auf technischer Ebene das umgesetzt, was mit Hilfe der Domänensprache fachbezogen verwendet wird.

Ereignisquelle: Jede Komponente bietet in seiner Schnittstelle Ereignisse an, die von anderen Komponenten abonniert werden können; z.B. bietet der Formschluss die Ereignisse "Form offen" oder "Form verriegelt" an.

Ereignissenken: Jede Komponente spezifiziert in seiner Schnittstelle Ereignissenken, die sie benötigt, um auf Ereignisse im System reagieren zu können, die asynchron zum Produktionsablauf auftreten; z.B. das Drücken der Stoptaste.

Kapselung: Als Kapselung bezeichnet man in der Objektorientierung das Verbergen von Implementierungsdetails (u.a. Struktur und Daten). Der direkte Zugriff auf die interne Datenstruktur wird unterbunden und erfolgt stattdessen über definierte Schnittstellen.

Kommando: Jede Komponente bietet in seiner Schnittstelle eine Reihe von Kommandos (Befehle) an, über die auf der Komponente Aktionen ausgelöst werden können; z.B. bietet der Formschluss die Kommandos "Schliessen" oder "Öffnen" an.

Kommandoargument: Jedes Kommando kann beliebig viele Kommandoargumente haben. Diese Argumente sind die Daten, die für die Ausführung des Kommandos notwendig sind, wie z.B. Geschwindigkeiten, Zeiten, Drücke, Wege etc.

Komponente: Eine Komponente beschreibt eine mechanische Baugruppe der Spritzgiessmaschine, wie z.B. den Formschluss, das Aggregat, etc. Die Maschine kann so als Verbund von Komponenten betrachtet werden. Diese Form der Strukturierung lässt sich in der Steuerungssoftware fortsetzen, wo jede Hardware-Komponente ein Abbild als Software-Komponenten findet. Auch logische Komponenten, die z.B. verfahrenstechnisches Wissen einfangen oder auch Timer-Komponenten, lassen sich so einfach realisieren. Das Komponentenkonzept ist auch für den Bediener leicht zu verstehen.

Jede Komponente bietet in seiner Schnittstelle Kommandos sowie Ereignisquellen und - senken an.

Die Komponenten repräsentieren auf logischer Ebene die physikalisch zu steuernden Elemente der Maschine inklusive allfälliger Peripheriegeräte. Die Programmierung der Abläufe erfolgt auf der Basis der jeweils benötigten Komponenten. Diese Komponenten bieten ihre Funktionalität in der Form von parametrierbaren Kommandos an. Zudem verfügen sie über eine Ereignisschnittstelle, über die alle relevanten Zustände einer Komponente in abonnierbarer Form zur Verfügung stehen.

Programmieren: Das Erstellen eines Produktionsablaufs und die Parametrierung der im Ablauf verwendeten Komponenten und Kommandos.

Prozess-Engine: Infrastrukturteil, welcher die notwendige Logik beinhaltet, um einen mit der Process Application Language modellierten Produktionsablauf ausführen zu können. Ausführen bedeutet, dass die Prozess-Engine auf den Komponenten die Kommandos gemäss dem Produktionsablauf aufruft.

Reaktives System: Das System ist ereignisgetrieben, d.h. es reagiert auf Ereignisse. Es gibt keine Statusabfragen (Polling). Wenn sich eine Komponente A für den Status der Komponente B interessiert, abonniert A das Ereignis der Komponente B, welches Statusänderungen mitteilt. Mit diesem Prinzip wird die Kommunikation auf ein Minimum beschränkt.

Spritzzyklus: Die einzelnen Achsen der Spritzgiessmaschine haben einen zyklischen Ablauf und bilden zusammen den Spritzzyklus. Die Achsen sind zwar miteinander synchronisiert, damit keine Achse "davonläuft" aber sie haben keinen gemeinsamen Synchronisationspunkt, z.B. einen gemeinsamen Start-/Endpunkt (wie bei EP 573 912).

Im Fertigungsprozess durchläuft das Spritzteil verschiedene Fertigungsstufen. Der Ablauf in dem das Spritzteil die Fertigungsstufen durchläuft wird als Teilezyklus bezeichnet. Der Teilezyklus kann in den Produktionsablauf integriert werden, wobei der Produktionsablauf den Teilezyklus treibt. Der Teile- und der Maschinenzyklus müssen dabei nicht zwingend identisch sein. Ein virtuelles Spritzteil durchläuft die verschiedenen Fertigungsstufen und kann dabei Informationen sammeln, die wiederum Einfluss auf den Produktionsablauf haben können; z.B. sammelt das virtuelle Spritzteil die Q-Daten und weiss daher jederzeit, ob es noch ein Gutteil ist oder nicht. Mit dieser Info lässt sich dann z.B. die Ausschussweiche steuern.

Verhaltensvollständig: Komponenten oder allg. Objekte sind verhaltensvollständig, wenn sämtliche Funktionalitäten als Verhalten bzw. Methoden an den Objekten realisiert werden. Solche Objekte können direkt und automatisiert visualisiert werden (vollständig generische Visualisierung).

Das Konzept der an sich bekannten objektorientierten Programmierung kann wie folgt beschrieben werden. Die einzelnen Bausteine, aus denen ein objektorientiertes Programm während seiner Abarbeitung besteht, werden, wie bereits erwähnt, als Objekte bezeichnet. Die Konzeption dieser Objekte erfolgt dabei in der Regel auf Basis der folgenden Paradigmen:
Abstraktion: Jedes Objekt im System kann ats ein abstraktes Modell eines Akteurs betrachtet werden, der Aufträge erledigen, seinen Zustand berichten und ändern und mit den anderen Objekten im System kommunizieren kann, ohne offen legen zu müssen, wie diese Fähigkeiten implementiert.
Kapselung: Objekte können den internen Zustand anderer Objekte nicht in unerwarteter Weise lesen oder ändern. Ein Objekt hat eine Schnittstelle, die darüber bestimmt, auf welche Weise mit dem Objekt interagiert werden kann. Dies verhindert das Umgehen von Invarianten des Programms.
Polymorphie: Verschiedene Objekte können auf die gleiche Nachricht unterschiedlich reagieren. Wird die Zuordnung einer Nachricht zur Reaktion auf die Nachricht erst zur Laufzeit aufgelöst, dann wird dies auch späte Bindung (oder dynamische Bindung) genannt.
Vererbung: Neue Arten von Objekten können auf der Basis bereits vorhandener Objekt-Definitionen festgelegt werden. Es können neue Bestandteile hinzugenommen werden oder vorhandene überlagert werden. Wird keine Vererbung zugelassen, so spricht man zur Unterscheidung oft auch von objektbasierter Programmierung.
Klassen: Zur besseren Verwaltung gleichartiger Objekte bedienen sich die meisten Programmiersprachen des Konzeptes der Klasse. Klassen sind Vorlagen, aus denen Objekte zur Laufzeit erzeugt werden. Im Programm werden dann nicht einzelne Objekte, sondern eine Klasse gleichartiger Objekte definiert. Man kann sich die Erzeugung von Objekten aus einer Klasse vorstellen wie das Fertigen von Autos aus dem Konstruktionsplan eines bestimmten Fahrzeugtyps. Klassen sind die Konstruktionspläne für Objekte. Die Klasse entspricht in etwa einem komplexen Datentyp prozedurater Programmierumgebungen, geht aber darüber hinaus: Sie legt,nicht nur die Datentypen fest, aus denen die mit Hilfe der Klassen erzeugten Objekte bestehen, sie definiert zudem die Algorithmen, die auf diesen Daten operieren. Während also zur Laufzeit eines Programms einzelne Objekte miteinander interagieren, wird das Grundmuster dieser Interaktion durch die Definition der einzelnen Klassen festgelegt. In manchen Programmiersprachen gibt es außerdem zu jeder Klasse wiederum ein bestimmtes Objekt, das so genannte Klassenobjekt, das dazu da ist, die Klasse selbst zur Laufzeit zu repräsentieren. Dieses Klassenobjekt ist dann auch zuständig für die Erzeugung der Objekte der Klasse und den Aufruf des passenden Algorithmus. Klassen werden in der Regel in Form von Klassenbibliotheken zusammengefasst, die häufig thematisch organisiert sind. So können Anwender einer objektorientierten Programmiersprache Klassenbibliotheken erwerben, die beispielsweise den Zugriff auf Datenbanken ermöglichen.
Methoden: Die einer Klasse von Objekten zugeordneten Algorithmen bezeichnet man auch als Methoden. Häufig wird der Begriff Methode synonym zu Funktion oder Prozedur gebraucht, obwohl die Funktion oder Prozedur eher als Implementierung einer Methode zu betrachten ist. Im täglichen Sprachgebrauch sagt man auch "Objekt A ruft Methode m von Objekt B auf." Eine besondere Rolle spielen Methoden für die Kapselung, insbesondere auch als Zugriffsfunktionen. Spezielle Methoden zur Erzeugung bzw. "Zerstörung" von Objekten heißen Konstruktoren und Destruktoren.

### Kurze Beschreibung der Erfindung

Die Erfindung wird nun an Hand einiger Beispiele mit weiteren Einzelheiten erläutert. Es zeigen:
- die Figur 1: zeigt rein schematisch oben den ganzen Problemkreis gemäss Aufgabenstellung und unten rechts die Lösung mit Hilfe einer Domain- Spezifique Language (DSL);
- die Figur 2: zeigt in einer konkreteren Ausgestaltung einer Multi-DSL-Umgebung mit einem Mehrzweck-Datenspeicher;
- die Figur 3:: die Steuerung als geordnete Sammlung von Komponenten als Konzept für das Kontrollsystem;
- die Figur 4:: die Schichtarchitektur der neuen Lösung (Layer Model);
- die Figur 5:: die schematische Darstellung des Ablauf-Editors;
- die Figur 6:: ein Beispiel für die graphische Darstellung der Process Application Language (PAL);
- die Figur 7:: ein Beispiel für die textuelle Darstellung der Process Application Language;
- die Figur 8:: ein typisches Vorgabeblatt des Werkzeugbauers mit den Instruktionen für den Werkzeugablauf.

### Wege und Ausführung der Erfindung

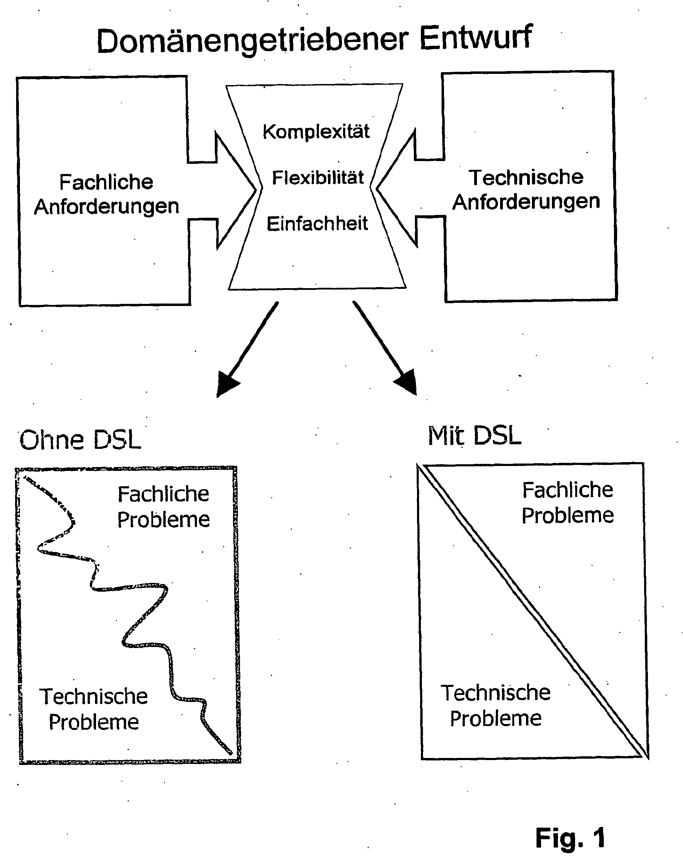

In der Folge wird auf die Figur 1 Bezug genommen. Die bisherige Praxis zeigt, dass in der Steuerungs-Software z.B. einer Spritzgiessmaschine fachliche und softwaretechnische Probleme immer wieder aufeinandertreffen. Dies führt zwangsweise zu einer erhöhten Software-Komplexität. Die neue Lösung schlägt für die Umsetzung der fachlichen und technischen Anforderungen eine konsequente Trennung mit Hilfe von Domänensprachen (engl. Domain-Specific-Language - DSL) vor (Figur 1, rechts unten). Die Figur links unten zeigt einen domäriengetriebenen Entwurf ohne DSL. Der dick ausgezogene Strichverlauf symbolisiert das völlige Ineinandergreifen der beiden Problembereiche ohne DSL. Die Folge ist nicht nur eine erhöhte Komplexität, sondern vor allem auch viel mehr Arbeit bei jeder späteren Programmänderung. Der domänengetriebene Entwurf auf der Basis von domänenspezifischen Sprachen bietet den grossen Vorteil, dass technische Aspekte getrennt von den fachlichen Erfordernissen behandelt und gelöst werden können. Dies erlaubt die fachliche Programmierung
- näher an den fachlichen Problemen und damit konkreter
- und weiter entfernt von technischen Problemen und damit abstrakter durchzuführen.

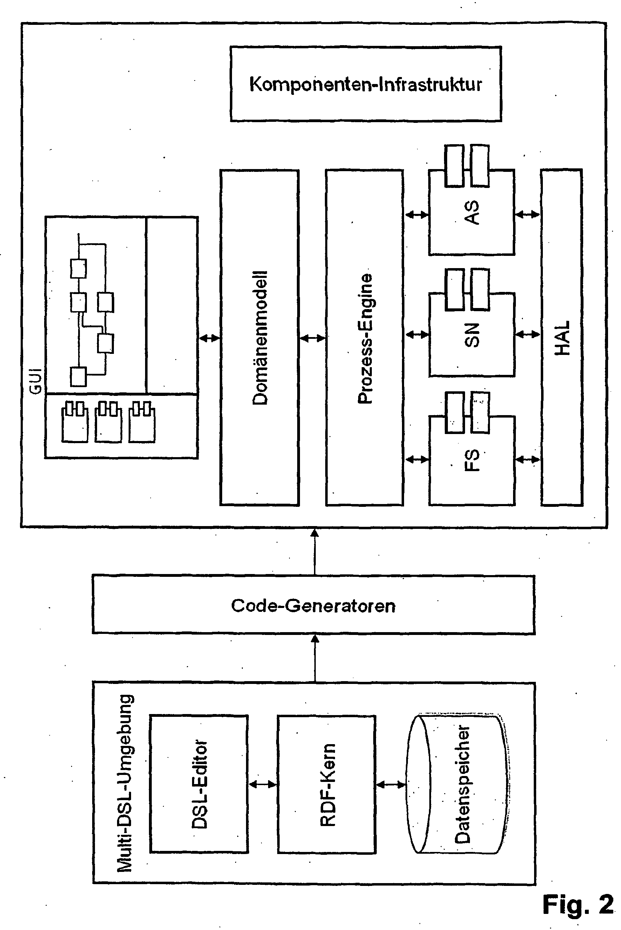

Die Figur 2 zeigt bereit etwas konkreter die neue Lösung mit einer Multi-DSL-Umgebung für domänengetriebenen Entwurf. Es kann die Aufgabenstellung optimal gelöst werden, dank den folgenden Vorteilen:
- Verständlichkeit der Lösung
- Änderungsfreundlichkeit
- Brauchbare Dokumentation
- Nähe zu den Problemen auf der fachlichen und technischen Ebene.

Die Multi-DSL-Umgebung für domänengetriebenen Entwurf mit einem aktiven Mehrzweckdatenspeicher bildet die Grundlage für die Erstellung der notwendigen DSLs. Der anfänglich höhere Entwicklungsaufwand für die Erstellung dieser Infrastruktur wird durch gesteigerte Effektivität und Effizienz mehr als aufgewogen. DSLs insbesondere in einer Multi-DSL-Umgebung erlauben einen echten domänengetriebenen Entwurf (DGE). Der Domänengetriebene Entwurf (DGE) stellt das fachliche Problem ins Zentrum und macht keine technischen Vorgaben. Die DSL bringt uns näher an das fachliche Problem; sie reduziert die ungewollte und nicht die essentielle Komplexität. Die Trennung von fachlichen und technischen Belangen durch eine DSL bringt Effektivitäts- und Effizienzsteigerungen. Für die technische Umsetzung braucht es nach wie vor Allzwecksprachen wie C++. Durch die Reduktion der ungewollten Komplexität lassen sich fachliche Probleme besser und damit schneller analysieren, verstehen und lösen.

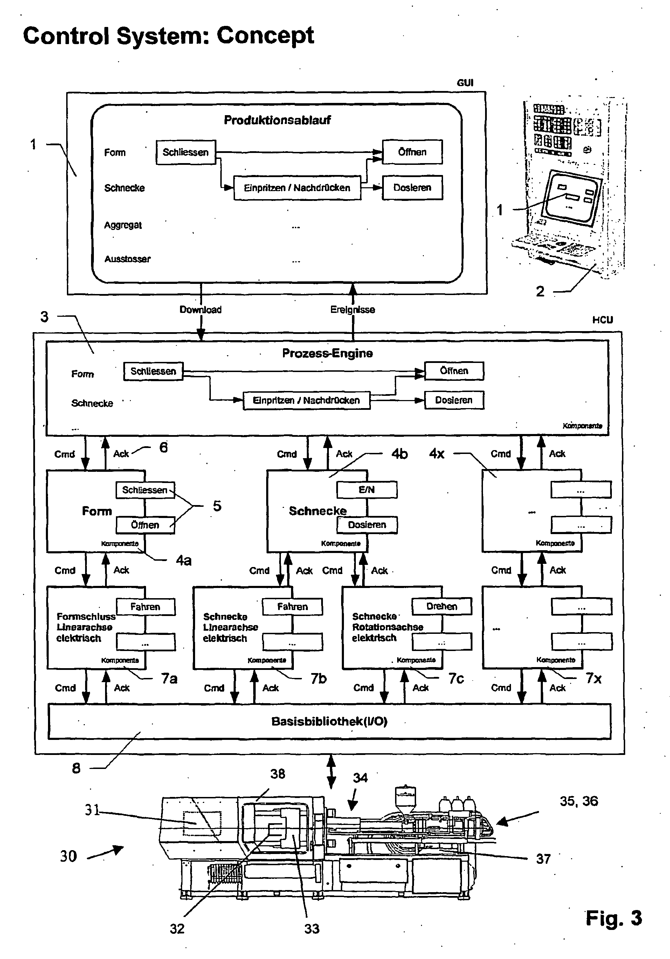

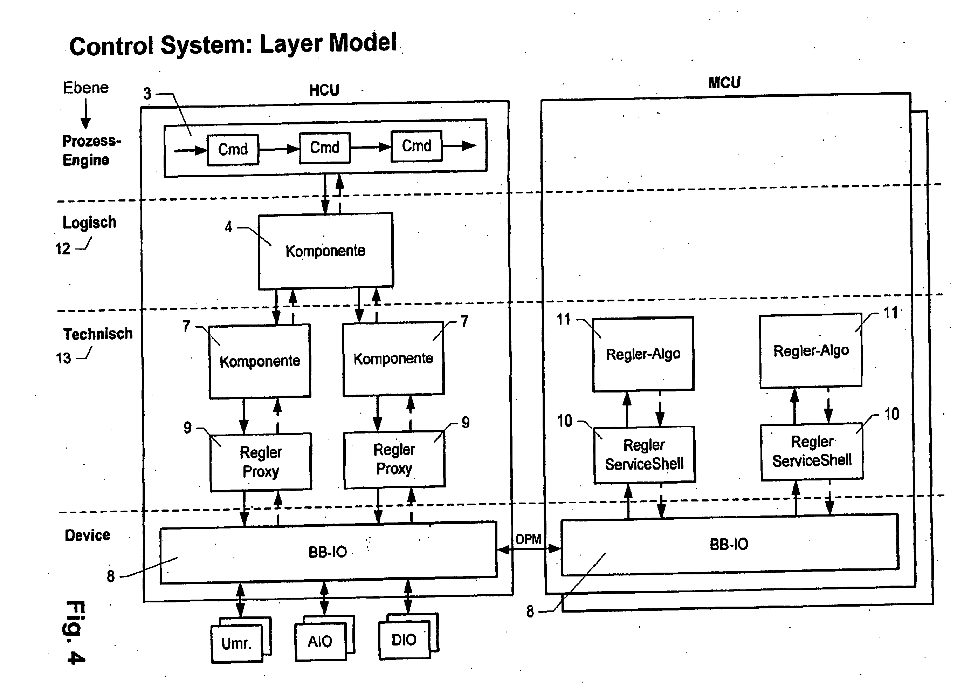

Das der Steuerung zu Grunde liegende Systemmodell gemäss Figur 3 und 4 betrachtet die Maschine als Verbund von kooperierenden Komponenten. Eine Komponente 4, 7 verkörpert dabei jedes beliebige Element der Spritzgiessmaschine sowohl auf logischer als auch auf physikalischer Ebene einschliesslich der dieser möglicherweise zugeordneten Peripheriegeräte. Auf Basis der an der Maschine vorhanden Komponenten erstellt der Benutzer an der Bedieneinheit 2 bzw. am Bedienerterminal 1 Maschinenabläufe 1. Um einen Maschinenablauf auszuführen, wird dieser von der Steuerung in die Prozess-Engine geladen. Die Prozess-Engine 3 treibt nun den Ablauf, d.h. sie ruft auf den involvierten Komponenten 4 die Kommandos 5 gemäss dem geladenen Maschinenablauf auf. Wenn eine Komponente ein Kommando ausgeführt hat, wird dies dem Aufrufer des Kommandos signalisiert 6. Die Prozess-Engine ist der Infrastrukturteil, welcher die notwendige Logik beinhaltet, um einen mit der Process Application Language modellierten Produktionsablauf ausführen zu können. Ausführen bedeutet, dass die Prozess-Engine auf den Komponenten die Kommandos gemäss dem Produktionsablauf aufruft. Die Prozess-Engine ruft beispielsweise auf der Komponente "Form" 4a das Kommando "Schliessen" auf. Die Form-Komponente wiederum ruft darauf auf der elektrischen Linearachse "Formschluss" 7a das Kommando "Fahren" auf. Über die Basisbibliothek 8 gelangt der Fahrauftrag an den Regler 11 (Figur 2), der die Bewegung der Achse, gemäss dem vorgegebenen Fahrprofil regelt. Hat die Achse ihr Ziel erreicht, signalisiert dies der Regler der Linearachs-Komponente 7a, diese signalisiert darauf der Form-Komponente 4a das Ende des Fahrkommandos und zum Schluss signalisiert die Form-Komponente der Prozess-Engine 3 das Ende des Schliesskommandos.

Da es sich um ein reaktives ereignisgetriebenes System handelt, sind Kommandoaufrufe nicht blockierend und es können quasi gleichzeitig mehrere Kommandos auf unterschiedlichen Komponenten angestossen werden, beispielweise läuft das "Dosieren" parallel zum "Öffnen" und wieder "Schliessen" der Form. Die Koordination und Synchronisation übernimmt dabei die Prozess-Engine 3.

In der Steuerung wird zwischen Komponenten auf logischen 4, 12 und solchen auf technischer 7, 13 Ebene unterschieden. Logische Komponenten 4 repräsentieren eine Funktionseinheit der Spritzgiessmaschine bzw. der Produktionszelle, beispielsweise die Formschlusseinheit (kurz Form) 4a, die Dosier- und Spritzeinheit (kurz Schnecke) 4b etc. Eine logische Komponente kann aus mehreren Achsen bestehen, beispielsweise besteht die Dosier- und Spritzeinheit 4b aus einer Linear- 7b und einer Rotationsachse 7c. Eine technischen Komponente 7 repräsentiert eine Achse. Sie sorgt dafür, dass die Antriebstechnologie einfach ausgetauscht werden kann, indem sie die Antriebstechnologie kapseln. Damit hat ein Wechsel der Antriebstechnologie keinen Einfluss auf die logischen Komponenten oder auf die konfigurierten Maschinenabläufe.

Die physisch realen Komponenten sind unten in Figur 3 symbolisch mit dem Bild einer Spritzgiessmaschine 30 dargestellt. Von der Vielzahl der Einzelkomponenten "X" sind nur die folgenden angedeutet: Antrieb bzw. Achse, Formbewegung 31, Ausstosser 32, bewegliche Form bzw. Werkzeug 33, Schnecke 34, Linearantrieb der Schnecke (Linearachse) 35 und Rotationsantrieb der Schnecke (Rotationsachse) 36, Aggregat 37, Schutzverdeck 38.

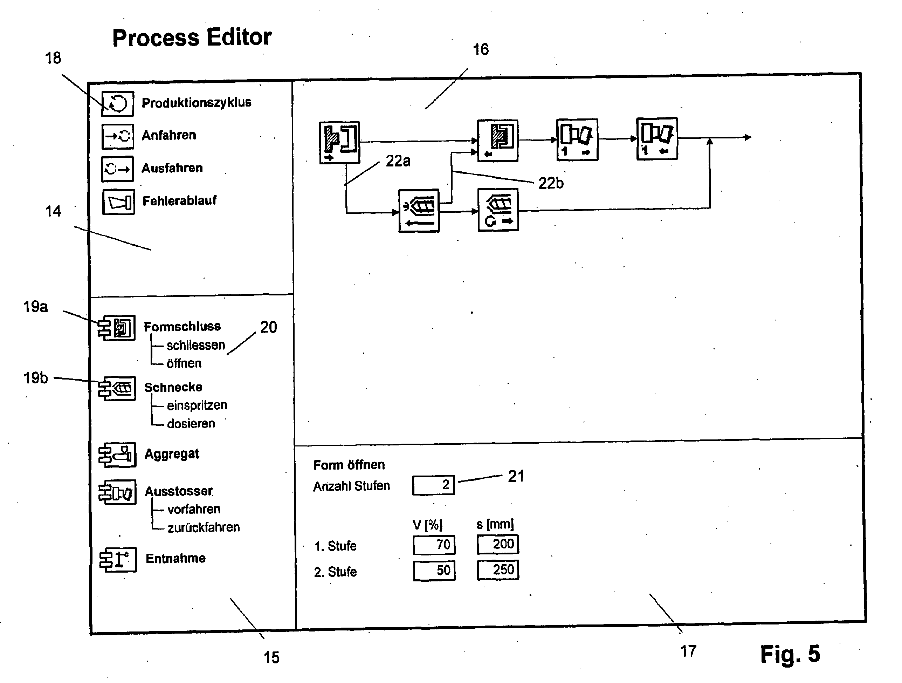

Die Figur 5 zeigt einen Ablaufeditor. Die Bedienung der Maschine ist wesentlich einfacher, wenn der Maschinenablauf für den Bediener explizit sichtbar ist und die hierzu relevanten Informationen klar erkennbar sind und bei Bedarf geändert werden können. Der visualisierte Maschinenablauf auf der Basis von bekannten Komponenten wie Formschluss, Aggregat, Ausstosser etc. lässt sich dabei auch als ordnendes Element für die Parametrierung der einzelnen Kommandos nutzen, mit deren Hilfe die Maschine letztlich gesteuert wird. Die einzelnen Kommandos wie z.B. "Form schliessen", "dosieren" oder "einspritzen" können direkt dargestellt und zur Bearbeitung angeboten werden. Mit dem Ablaufeditor gemäss Figur 3 kann nun ein beliebiger Ablauf, beispielsweise der Produktionsablauf, modelliert und die verwendeten Komponenten und Kommandos parametriert werden. Der Ablaufeditor bzw. die Abläufe stehen im Zentrum der Programmierung der Spritzgiessmaschine. Die ganze Parametrierung der Spritzgiessmaschine inkl. der zugeordneten Peripheriegeräte kann über den Ablaufeditor eingesehen und verändert werden. Damit entfällt die heute gängige Aufteilung der Parameter auf eine Vielzahl von Eingabemasken (Bildschirmseiten). Der Ablaufeditor gemäss Fig. 3 besteht aus vier Bereichen:
- der Liste aller vorhandenen Abläufe, Ablaufliste; 14,
- der Liste aller physikalisch vorhandenen Komponenten Komponentenliste; 15,
- der grafischen Darstellung des Ablaufs Ablaufdarstellungsfeld; 16 und
- der Eingabemaske für die Parametrierung von Komponenten und Kommandos, Parametrierfeld; 17.

Wird ein bestehender Ablauf selektiert 18, so wird der Ablauf im Ablaufdarstellungsfeld 16 grafisch visualisiert. Der Benutzer kann nun den selektierten Ablauf verändern, umbenennen, kopieren oder löschen. Um einen neuen Ablauf zu erstellen kann er in der Ablaufliste 14 die Funktion "Neu" aufrufen. Es besteht die Möglichkeit aus der Liste der physikalisch vorhandenen Komponenten - im Sinne einer Vorauswahl - diejenigen zu selektiert, die für den neuen Ablauf benötigt werden. Um den eigentlichen Ablauf zu erstellen, selektiert der Benutzer ein Kommando 20 einer Komponente 19 und fügt dieses in den Ablauf 16 ein. Dies wiederholt er solange bis der Ablauf komplett ist. Wenn der Benutzer ein Kommando im Ablauf selektiert, werden im Parametrierfeld 17 die zugehörigen Kommandoparameter angezeigt und können dort auch eingegeben werden. Ein Kommando kann in einem Ablauf mehrfach verwendet werden. Jede Verwendung (Instanz des Kommandos) hat dabei seine eigene Parametrierung. Im Ablaufdarstellungsfeld 16 können zwischen den Kommandos Synchronisationen 22 eingefügt und gegebenenfalls auch parametriert werden. Im Weiteren besteht die Möglichkeit die im Ablauf eingefügten Kommandos und Synchronisationen zu verschieben oder zu lösche oder die zugehörige Parametrierung zu verändern. Innerhalb eines zyklischen Ablaufs sind viele Kommandos symmetrisch, d.h. wenn eine Achse (z.B. ein Ausstosser) vorgefahren wird, muss sie irgendwann auch wieder zurückgefahren werden. Anhand dieses Komponentenwissens fügt die Steuerung automatisch Leerstellen in den Ablauf ein, die der Benutzer mit konkreten Kommandos füllen muss.

Nur in Abläufen verwendete Komponenten und Kommandos müssen parametriert werden. So wird auf einfache und übersichtliche Art die in der Steuerung installierte Mannigfaltigkeit auf das Wesentliche reduziert. Die Frage nach den zwingend notwendigen Eingaben, damit der Produktionsablauf gestartet werden kann, stellt sich nicht mehr. Ein Ablauf ist vollständig, wenn alle Leerstellen ausgefüllt und alle verwendeten Komponenten und Kommandos vollständig parametriert sind. Aus der Liste der vorhandenen Abläufe 14 ist auf einen Blick ersichtlich, welche Abläufe vollständig sind, dazu werden unvollständige Abläufe markiert. Im Ablaufdarstellungsfeld 16 und in der Komponentenliste 15 wiederum werden unvollständig parametrierte Kommandos bzw. Komponenten ebenfalls hervorgehoben. Auch im Parametrierfeld 17 sind nicht eingegebene Parameter markiert. Im Weiteren besteht die Möglichkeit bestehende Abläufe als Makro in anderen Abläufen zu verwenden. Dazu wird der bestehende Ablauf wie ein Kommando als Makro in einen weitern Ablauf eingefügt. Das Makro kann expandiert werden, um z.B. die Parametrierung anzupassen. Die Erstellung eines Ablaufs auf der Basis der vorhandenen Komponenten und deren Kommandos unterliegt keinen Einschränkungen! Der Benutzer wird jedoch im Rahmen einer Plausibilitätsprüfung auf potentielle Fehler im Ablauf hingewiesen, wenn z.B. der Ausstosser bei geschlossenem Werkzeug vorfahren soll, so muss dies durch den Benutzer bestätig werden.

Die Process Application Language (PAL) ist eine komponentenorientierte Domänensprache und dient der Modellierung von zyklischen und nicht-zyklischen Maschinenabläufen. Sie bietet neben einer vollständigen Unterstützung für die parallele Ausführung von Ablaufsequenzen 23 auch Befehle für
- das Auslösen von Kommandos 25 von Komponenten inklusive der dazu nötigen Kommandoargumente,
- das Signalisieren von Zuständen 26,
- das Warten auf das Signalisieren von Zuständen 24,
- das Setzen von Bedingungen für die Ausführung bestimmter Ablaufzweige,
- das Gruppieren von Ablaufsequenzen zu einem Zyklus 27 + 28 und
- das Bilden von Namensräumen scope, 29.

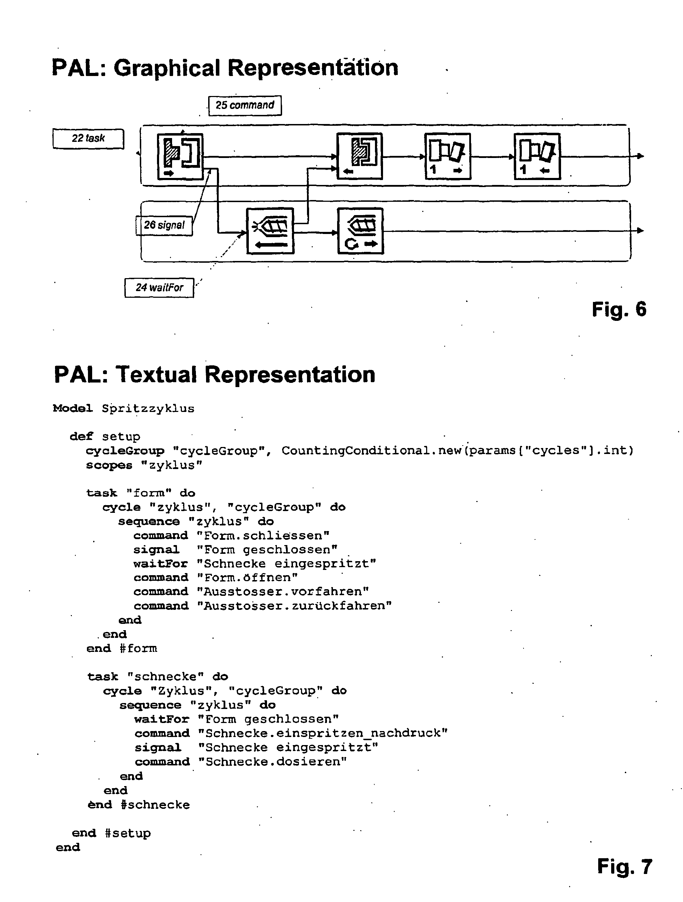

Die PAL kann sowohl grafisch Figur 6 als auch textuell Figur 7 visualisiert werden. Die beiden Darstellungsformen haben den gleichen Informationsgehalt. Die grafische Darstellung wird für die Bedienoberfläche bevorzugt, da sie einfacher zu verstehen ist und der Ablauf auf einen Blick erfasst werden kann. Die Wörter der Domänensprache sind in Figur 5 fett markiert.

Die Figur 7 ist ein typisches Instruktionsblatt des Werkzeugherstellers. Das Einrichten eines neuen Werkzeuges 33 für einen entsprechenden Auftrag für eine Produktion kann wie folgt ablaufen. Vom Werkzeugbauer erhält der Einrichter meist eine Werkzeugzeichnung, eine Beschreibung des Werkzeugablaufs und evtl. einen Bericht über die Werkzeugabmusterung. Anhand dieser Angaben (Werkzeuggrösse, Schussvolumen, Schliesskraft usw.) ermittelt bzw. überprüft der Einrichter Grösse und Ausrüstung der Spritzgiessmaschine. Der Einrichter spannt das Werkzeug 33 auf, verbindet die Anschlüsse und überprüft danach im Hand- oder Einrichtbetrieb die Funktion der einzelnen Achsen des Werkzeuges 33. Jetzt kann der Einrichter den Werkzeugablauf via Bedienoberfläche der Maschine eingeben. Die einzelnen Achsbewegungen werden meist zuerst im Hand- oder Einrichtbetrieb ausprobiert und dann erst in den Ablauf integriert. In dieser Phase wird bewusst auf parallele Achsbewegungen verzichtet, da der Einrichter zuerst Sicherheit im Umgang mit dem Werkzeug und dem Ablauf gewinnen muss. Wenn der Werkzeugablauf läuft, werden als nächstes die Achsen der Spritzeinheit (Aggregat-, Dosier- und Spritzachse) in den Ablauf integriert. Jetzt kann zum ersten Mal ein Teil gespritzt werden. Der Spitzprozess wird nun soweit verfeinert, dass qualitativ gute Teile produziert werden. Nun geht der Einrichter daran die Produktion zu optimieren, mit dem Ziel qualitativ gute Teile in möglichst kurzer Zeit zu produzieren. Er hat die Möglichkeit die Zykluszeit durch Parallelisierung der Abläufe und durch schnellere Fahrbewegungen zu reduzieren. Im letzten Schritt werden Peripheriegeräte, beispielsweise ein Entnahmesystem oder ein Angusspicker, in den Ablauf integriert.

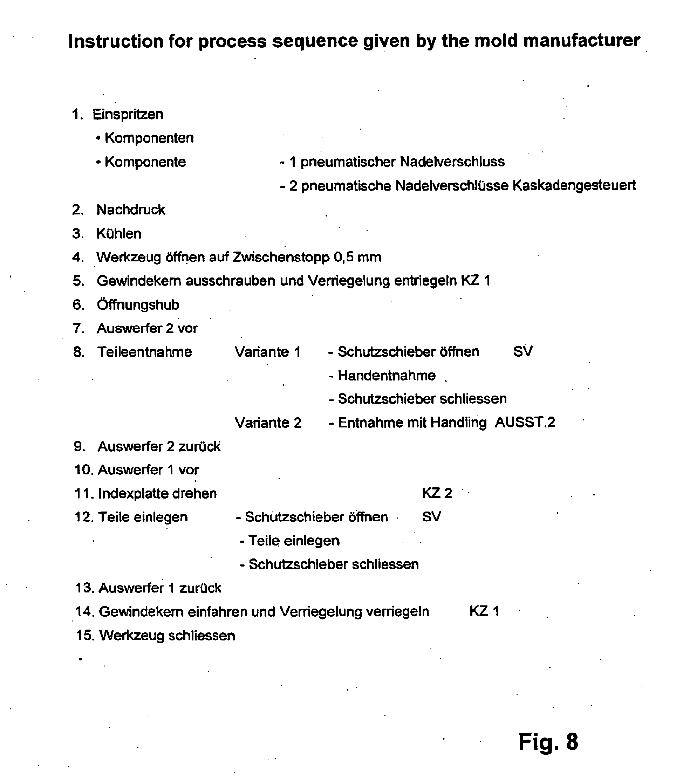

Die Figur 8 zeigt ein Beispiel für die Instruktion der Prozess-Sequenzen, wie sie vom Hersteller von Spritzgiesswerkzeugen vorgeschrieben werden.

## Patentansprüche

1. Verfahren zur Steuerung und Bedienung einer Produktionszelle zur Herstellung von Kunststoff-Spritzgiessteilen, insbesondere mit Einschluss wenigstens eines Teiles der ihr zugeordneten Peripheriegeräte, wobei der Produktionsablauf durch den Benutzer vorgegeben und parametriert wird, wobei
a) bei der Bedienung und beim Betrieb einer Spritzgiessmaschine auf eine durchgängige Art und Weise gearbeitet werden kann,
b) der Steuerung Rechner-/Speichermittel zugeordnet sind zur Aufnahme einer dezentral organisierten Wissensbasis, und
c) die Maschinenabläufe auf der Basis von verhaltensvollständigen Komponenten, welche Teil eines Domänenmodells sind, mit Hilfe einer Domänensprache erstellt, verwaltet und ausgeführt werden, wobei für jeden beliebigen Umbau der ganzen Steuerung die verhaltensvollständigen Komponenten ersetzt und ausgetauscht werden können.

2. Verfahren nach Anspruch 1,
***wobei*** die Steuerung, Programmierung und Konfiguration auf der Basis einer komponentenorientierten Domänensprache zur Modellierung von zyklischen und/oder nichtzyklischen Maschinenabläufen, ausgehend von einer Repräsentation der Maschine, als geordnete Sammlung von Komponenten erfolgt, wobei der Ablauf vom Benutzer konfiguriert bzw. ***erstellt*** wird.

3. Verfahren nach Anspruch 1 oder 2,
***wobei*** eine Komponente jedes beliebige Element der Produktionszelle ***verkörpert*** einschliesslich der dieser möglicherweise zugeordneten Peripheriegeräte, ***insbesondere auch Timer-Komponenten.***

4. Verfahren nach einem der Ansprüche 1 bis 3,
***wobei*** für jeden Problemraum in der Steuerung auf der Basis eines schlüssigen Domänemodells und mit Hilfe von fachspezifischen Domänesprachen die Lösung auf fachlicher Ebene beschrieben und daraus der Programmcode für die technische Umsetzung automatisch generiert wird.

5. Verfahren nach einem der Ansprüche 1 bis 4,
***wobei*** für die Beschreibung beliebiger Abläufe in der Produktionszelle eine Domänensprache festgelegt wird, wobei die Domänensprache graphisch und / oder textuell auf dem Bedienerterminal bzw. einer Eingabemaske visualisiert wird.

6. Verfahren nach einem der Ansprüche 1 bis 5,
***wobei*** wenigstens ein Teil der an der jeweiligen Produktionszelle vorhandenen oder ihr zugeordneten Einrichtungen in der Steuerung als Komponenten erfasst und berücksichtigt werden, und dass die Komponenten auf der Bildschirm- bzw. Bedieneroberfläche erscheinen und vom Benutzer als Basis für die Modellierung beliebiger Abläufe verwendet werden können.

7. Verfahren nach einem der Ansprüche 1 bis 6,
***wobei*** Komponenten konkrete Baugruppen oder Module sind, wie Spritzachse und / oder Plastifizierachse und / oder Spritzaggregat und / oder Formschlussachse und / oder Formachse und / oder Formdrehteller und / oder Kernzüge und / oder Schieber und/oder Ausstosserachse und/oder Entnahmerobotik und / oder Säulenverstellachse und / oder Wärme- und Kühleinheit und / oder Hydraulikaggregat (wenn vorhanden) und / oder elektronische Bauelemente und Baugruppen sowie Sensorikmittel und / oder Materialzuführungs- und / oder Spritzgiessteilehandling und / oder das Spritzgiessteil.

8. Verfahren nach einem der Ansprüche 1 bis 7,
***wobei*** jede der erfassten verhaltensvollständigen Komponenten relevantes verfahrenstechnisches, mechanisches und weiteres relevantes Wissen enthält, um im Verbund mit anderen Komponenten die jeweils in einem Ablauf benötigten Funktionen in Form von Kommandos geordnet zur Verfügung zu stellen.

9. Verfahren nach einem der Ansprüche 1 bis 8,
***wobei*** jede der verhaltensvollständig erfassten Komponenten relevantes verfahrenstechnisches, mechanisches und weiteres relevantes Wissen enthält, um für einen Schutz des durch die Komponente repräsentierten Maschinenteiles sowie deren sicheren Verwendung zu sorgen.

10. Verfahren nach einem der Ansprüche 1 bis 9,
***wobei*** die im Produktionsablauf erforderlichen Betriebsparameter mittels einer diese Betriebsparameter speichernden Datenverarbeitungseinheit vom Benutzer eingespielt werden, wobei von der Steuerung sowohl das physikalisch als auch das maschinenseitig und werkzeugseitig konstruktiv bedingt Mögliche berücksichtigt wird.

11. Verfahren nach einem der Ansprüche 1 bis 10,
***wobei*** jede Komponente Steuerkommandos in Form einer Kommandoschnittstelle zur Verfügung stellt und eine Ereignisschnittstelle aufweist.

12. Verfahren nach Anspruch 11,
***wobei*** die Komponente über die Kommandoschnittstelle manipuliert wird, um gegebenenfalls ein oder weitere Kommandos auf weiteren mit dieser Komponente zusammenarbeitenden Komponenten auszulösen.

13. Verfahren nach einem der Anspruche 11 oder 12,
***wobei*** Zustandsänderungen bei Komponenten in Form von abonnierbaren Ereignissen über die Ereignisschnittstelle ausgegeben und als Basis für Synchronisationen direkt zwischen den Komponenten sowie als Synchronisationsquellen zur Beeinflussung des Produktionsablaufs verwendet werden können.

14. Verfahren nach einem der Ansprüche 1 bis 13,
***wobei*** im Sinne der Objektorientierung das Spritzgiessteil als virtuelle Komponente behandelt wird, wobei Kennwerte des Fertigungsprozesses dem Spritzgiessteil zugeordnet werden, der Status der Spritzgiessteile gespeichert und zur Beeinflussung des Spritzgiessprozesses, beispielsweise für die Steuerung einer Ausschussweiche, eingesetzt werden.

15. Verfahren nach einem der Ansprüche 1 bis 14,
***wobei*** beliebige zyklische und / oder nichtzyklische Abläufe im Bereich der Produktionszelle auf der Basis des Komponentenmodells erstellt und ausgeführt werden.

16. Verfahren nach einem der Ansprüche 1 bis 15,
**wobei** ausgehend von einer Repräsentation der Produktionszelle oder Teilen davon, insbesondere einer Spritzgiessmaschine, als geordnete Sammlung von Komponenten, Abläufe auf einer Eingabemaske der Bedieneroberfläche frei programmiert werden.

17. Verfahren nach einem der Ansprüche 1 bis 16,
***wobei*** der Produktionsablauf, insbesondere der Spritzgiessablauf, auf den Kommandos der physikalisch vorhandenen Komponenten basiert, interaktiv erstellt wird und die nachfolgenden Schritte umfasst:
a) die Steuerung bietet alle physikalisch vorhandenen Komponenten zur Auswahl an;
b) der Benutzer wählt im Sinne einer Vorauswahl die für den Ablauf benötigten Komponenten aus;
c) der Benutzer selektiert ein Kommando oder eine Ereignisquelle einer Komponente und fügt das Kommando oder die Ereignisquelle in den Ablauf ein;
d) Speichern dieser Eingabe in der Datenverarbeitungseinheit;
e) Wiederholen der Schritte c) bis d), bis der Ablauf vollständig ist;
wobei die Parametrierung der Kommandos, Ereignisquellen und Komponenten die folgenden Schritte umfasst:
f) Selektion eines Kommandos oder einer Ereignisquelle im Ablauf bzw. einer verwendeten Komponente,
g) Anzeigen der zugehörigen Parameter,
h) Eingabe der Parameter,
i) Speichern dieser Eingabe in der Datenverarbeitungseinheit;
j) Wiederholen der Schritte f) bis i), bis alle Kommandos und Ereignisquellen im Ablauf bzw. alle verwendeten Komponenten parametriert sind,
wobei die Schritte f) bis i) nach oder während der Erstellung des Ablaufs durchgeführt werden können, bis alle im Ablauf verwendeten Kommandos, Ereignisquellen und Komponenten parametriert sind.

18. Verfahren nach einem der Ansprüche 1 bis 17,
***wobei*** aus der geordneten Sammlung von Komponenten auf einer Eingabemaske eine Vorauswahl an Komponenten angeboten und / oder getroffen wird, welche für den Ablauf benötigt werden.

19. Verfahren nach einem der Ansprüche 1 bis 18,
***wobei*** alle an einer jeweiligen Produktionszelle vorhandenen bzw. ihr zugeordneten Einrichtungen, wie beispielsweise Peripheriegeräte und Werkzeug, als Komponenten behandelt werden.

20. Verfahren nach einem der Ansprüche 1 bis 19,
***wobei*** vor Start der Produktion auf der Eingabemaske die Maschinenabläufe interaktiv graphisch konfiguriert und die Betriebsparameter kommando- und komponentenorientiert eingegeben werden, wobei bei Vorhandensein eines entsprechenden bereits erstellten Datensatzes dieser vorzugsweise geladen wird.

21. Verfahren nach einem der Ansprüche 1 bis 20,
***wobei*** die Konfiguration eines Ablaufes frei gestaltet wird und aufgrund des Komponentenwissens beim Einfügen eines Kommandos auf der Eingabemaske automatisch für die zwingend notwendigen Folgeschritte weitere Kommandos als Leerstellen in den Ablauf eingefügt werden, wobei der Benutzer die Leerstellen durch konkrete passende Kommandos der betroffenen Komponenten aus der Komponentenliste der Eingabemaske füllt.

22. Verfahren nach einem der Ansprüche 1 bis 21,
***wobei*** die Steuervorrichtung eine Eingabemaske aufweist, enthaltend eine Ablaufliste, ein Ablaufdarstellungsfeld, eine Komponentenliste mit auswählbaren Kommandos, ferner ein Parametrierfeld, wobei der Bediener den Ablauf auf der Bedienoberfläche konfiguriert und parametriert.

23. Verfahren nach einem der Ansprüche 1 bis 22,
***wobei*** für die im konfigurierten Ablauf verwendeten Kommandos im Ablaufdarstellungsfeld der Eingabemaske laufend erkennbar gemacht wird, ob die Parametrierung vollständig ist.

24. Verfahren nach einem der Ansprüche 1 bis 23,
***wobei*** für die im konfigurierten bzw. gestalteten Ablauf verwendeten Komponenten in der Komponentenliste der Eingabemaske laufend erkennbar gemacht wird, ob die Parametrierung vollständig ist.

25. Verfahren nach einem der Ansprüche 1 bis 24,
***wobei*** für die Parametrierung der Komponenten und deren Kommandos nur Werte angenommen werden, welche gemäss Komponentenwissen innerhalb eines zulässigen Bereiches liegen.

26. Verfahren nach einem der Ansprüche 1 bis 25,
***wobei*** in der Ablaufliste ersichtlich ist, welche Abläufe nicht vollständig sind, d.h. dass diese Leerstellen enthält, bzw. Komponenten oder Kommandos verwendet wurden, welche nicht vollständig parametriert sind, wobei im Parametrierfeld diejenigen Parameter markiert werden, die nicht eingegeben sind, und ferner auf der Komponentenliste diejenigen Komponenten und im Ablaufdarstellungsfeld diejenigen Kommandos ersichtlich sind, welche nicht vollständig parametriert sind.

27. Verfahren nach einem der Ansprüche 1 bis 26,
***wobei*** parallele Abläufe synchronisiert werden können.

28. Verfahren nach einem der Ansprüche 1 bis 27,
***wobei*** sowohl für die Ablaufgestaltung wie auch für die Parametrierung dem Einrichter ein Expertensystem zur Verfügung gestellt wird.

29. Verfahren nach einem der Ansprüche 1 bis 28,
***wobei*** für alle erfolgreich ausgeführten Produktionsabläufe der ermittelte optimale Datensatz gespeichert wird und für gleiche oder ähnliche Produktionsabläufe vom Benutzer geladen werden kann.

30. Einrichtung für das Steuern und Bedienen einer Produktionszelle für die Herstellung von Kunststoff-Spritzgiessteilen mit einer Spritzgiessmaschine mit Rechner-/Speichermitteln, bei der der Produktionsablauf an einer Bedieneinrichtung durch den Benutzer vorgebbar und parametrierbar ist, wobei
a) die Rechner-/Speichermittel zur Aufnahme einer dezentral organisierten Wissensbasis ausgebildet sind und
b) an der Bedieneinrichtung ein Abbild von wenigstens einem Teil der an der jeweiligen Produktionszelle vorhandenen oder ihr zugeordneten Einrichtungen in einem Domänenmodell in Form von verhaltensvollständigen Komponenten erzeugbar ist und
c) Maschinenabläufe mit Hilfe einer Domänensprache erstellbar, verwaltbar und ausführbar sind, so dass
d) die Bedienung und der Betrieb einer Produktionszelle auf eine einfache und durchgängige Art und Weise ermöglicht werden,
wobei für jeden beliebigen Umbau der ganzen Steuerung die verhaltensvollständigen Komponenten ersetzbar und austauschbar sind.

31. Einrichtung nach Anspruch 30,
***wobei*** die Steuerung komponentenorientiert ausgebildet ist, wobei wenigstens ein Teil der in der Produktionszelle vorhandenen Einrichtungen als verhaltensvollständige Komponente erfassbar und berücksichtigt und über deren Kommandos ansteuerbar sind.

32. Einrichtung nach Anspruch 30 oder 31,
***wobei*** eine Einzelkomponente ein beliebiges Element der Spritzgiessmaschine oder der ihr zugeordneten Einrichtungen und Peripheriegeräte repräsentiert, beispielsweise Formschluss, Aggregat, Kernzug, Handlingsgerät, wobei ferner auch rein logische Komponenten möglich sind.

33. Einrichtung nach einem der Ansprüche 30 bis 32,
***wobei*** jede der berücksichtigten Komponenten eine Ereignisschnittstelle sowie eine Kommandoschnittstelle aufweist und über je ein eigenes Komponentenwissen verfügt.

34. Einrichtung nach einem der Ansprüche 30 bis 33,
***wobei*** sie eine Steuerungsinfrastruktur mit einer geordneten Sammlung von virtuellen Komponenten aufweist, entsprechend der Baugruppen der Produktionszelle, mit je zugeordneter Wissensbasis, wobei die Produktionszelle komponentenorientiert steuerbar und der Produktionsablauf mittels der Kommandos entsprechend dem konfigurierten Ablauf treibbar ist.

35. Einrichtung nach einem der Ansprüche 30 bis 34,
***wobei*** jede Komponente relevantes verfahrenstechnisches, mechanisches und weiteres relevantes Wissen enthält, um für einen Schutz des durch die Komponente repräsentierten Maschinenteiles zu sorgen.

36. Einrichtung nach Anspruch 30,
***wobei*** die Steuerung, Programmierung und Konfiguration über die Bedieneinrichtung auf der Basis einer komponentenorientierten Domänensprache zur Modellierung von zyklischen und / oder nichtzyklischen Maschinenabläufen, ausgehend von einer Repräsentation der Maschine als geordnete Sammlung von Komponenten durchführbar ist, und die Rechner- / Speichermittel ausgebildet sind zur Aufnahme einer dezentral organisierten Wissensbasis für die Komponenten.

37. Einrichtung nach Anspruch 36,
***wobei*** wenigstens ein Teil der an der jeweiligen Produktionszelle vorhandenen oder ihr zugeordneten Einrichtungen in der Steuerung als Komponenten erfassbar und berücksichtigt sind, wobei die Komponenten auf der Bildschirm- bzw. Bedieneroberfläche erscheinen und vom Benutzer als Basis für die Modellierung beliebiger Abläufe verwendbar sind.

38. Steuerung nach Anspruch 37,
***wobei*** die Bedieneroberfläche eine Eingabemaske aufweist, enthaltend eine Ablaufliste, ein Ablaufdarstellungsfeld, eine Komponentenliste mit auswählbaren Kommandos, ferner ein Parametrierfeld.

39. Verfahren nach einem der Ansprüche 25 bis 38,
wobei die Ausführung eines Ablaufs visualisierbar ist, sodass der Zustand jederzeit ersichtlich ist und im Fehlerfall Rückschlüsse auf die Ursache ermöglicht werden.

## Claims

1. A method for controlling and operating a production cell for producing plastic injection-moulded parts, in particular including at least part of the peripheral equipment assigned to it, wherein the production cycle is defined and parameterized by the user, wherein
a) in the handling and operation of an injection moulding machine, operations can be carried out in a continuous manner,
b) computing/storage means are associated with the control unit to hold a decentrally organized knowledge base, and
c) the machine cycles are established, managed and run on the basis of behaviourally complete components, which are part of a domain model, by means of a domain language, wherein for any modification of the entire control the behaviourally complete components can be replaced and exchanged.

2. The method according to Claim 1,
wherein the control, programming and configuration occurs on the basis of a component-oriented domain language for modelling cyclic and/or non-cyclic machine processes, based on a representation of the machine as an organized collection of components, the process being configured or respectively established by the user.

3. The method according to Claim 1 or 2,
wherein a component embodies any desired element of the production cell, including the peripheral equipment possibly assigned to it, in particular also timer components.

4. The method according to one of Claims 1 to 3,
wherein for each problem area in the control unit, the solution is described at the functional level on the basis of a coherent domain model and by means of specific domain languages, and the program code for the technical implementation is automatically generated therefrom.

5. The method according to one of Claims 1 to 4,
wherein a domain language is specified to describe any desired processes in the production cell, wherein the domain language is visualized on the operator terminal or respectively an input mask in graphic or text format.

6. The method according to one of Claims 1 to 5,
wherein at least part of the equipment existing at the respective production cell or assigned to it is registered and taken into account as components in the control unit, and the components appear on the screen or respectively operator interface and can be used by the user as the basis for modelling any desired processes.

7. The method according to one of Claims 1 to 6,
wherein components are concrete assemblies or modules, such as injection axis and/or plastification axis and/or injection aggregate and/or mould closure axis and/or mould axis and/or mould rotation disk and/or core pullers and/or sliders and/or ejection axis and/or extraction robotics and/or column adjustment axis and/or heating and cooling unit and/or hydraulic aggregate (if present) and/or electronic components and assemblies and sensor means and/or material supply and/or injection-moulded parts handling appliance and/or the injection-moulded part.

8. The method according to one of Claims 1 to 7,
wherein each of the registered behaviourally complete components contains relevant procedural, mechanical and further relevant knowledge in order to provide the functions required for each respective process in an organized form as commands, together with other components.

9. The method according to one of Claims 1 to 8,
wherein each of the registered behaviourally complete components contains relevant procedural, mechanical and further relevant knowledge in order to ensure the protection of the machine part represented by the component, as well as its safe application.

10. The method according to one of Claims 1 to 9,
wherein the operating parameters required in the production cycle are input by the user by means of a data-processing unit storing these operating parameters, wherein the control unit takes into account the physical possibilities as well as the possibilities determined by the construction of the machine and the tool.

11. The method according to one of Claims 1 to 10,
wherein each component provides control commands in the form of a command interface and has an event interface.

12. The method according to Claim 11,
wherein the component is manipulated via the command interface to trigger one or multiple commands on further components working together with this component, if necessary.

13. The method according to one of Claims 11 or 12,
wherein status modifications in components are released via the event interface in the form of subscribable events and can be used as a basis for synchronizations directly between the components, and as synchronization sources for influencing the production cycle.

14. The method according to one of Claims 1 to 13,
wherein the injection-moulded part is treated as a virtual component for the purpose of object orientation, wherein characteristic values of the manufacturing process are assigned to the injection-moulded part, the status of the injection-moulded parts is stored and used to influence the injection-moulding process, for example to control a reject gate.

15. The method according to one of Claims 1 to 14,
wherein any desired cyclic and/or non-cyclic processes within the area of the production cell are established and executed on the basis of the component model.

16. The method according to one of Claims 1 to 15,
wherein based on a representation of the production cell or parts thereof, in particular an injection-moulding machine, as an organized collection of components, processes are freely programmed on an input mask of the operator interface.

17. The method according to one of Claims 1 to 16,
wherein the production cycle, in particular the injection-moulding process, is established in an interactive manner based on the commands of the physically present components, and comprises the following steps:
a) the control unit offers all physically existing components as a selection;
b) the user selects the components required for the process in the sense of a pre-selection;
c) the user selects a command or an event source of a component and inputs the command or event source into the process;
d) this input is stored in the data-processing unit;
e) steps c) to d) are repeated until the process is complete;
wherein the parameterization of the commands, event sources and components comprises the following steps:
f) selection of a command or an event source in the process or respectively a component which is used;
g) display of the associated parameters;
h) input of the parameters;
i) this input is stored in the data-processing unit;
j) steps f) to i) are repeated until all commands and event sources in the process or respectively all components used have been parameterized,
wherein steps f) to i) can be carried out after or during the creation of the process, until all commands, event sources and components used in the process have been parameterized.

18. The method according to one of Claims 1 to 17,
wherein a pre-selection of components needed for the process is offered and/or made from the organized collection of components on an input mask.

19. The method according to one of Claims 1 to 18,
wherein all equipment present at a respective production cell or respectively assigned to it, such as for example peripheral devices and tools, are treated as components.

20. The method according to one of Claims 1 to 19, wherein prior to the start of production, the machine cycles are interactively graphically configured on the input mask and the operating parameters are entered in a command- and component-oriented manner wherein, if a corresponding, already generated dataset exists, this dataset is preferably loaded.

21. The method according to one of Claims 1 to 20,
wherein the configuration of a process is freely designed and, based on the component knowledge, when a command is inserted on the input mask, further commands are automatically inserted into the cycle as blanks for the compulsorily necessary follow-up steps, wherein the user fills the blanks with concrete, suitable commands for the components involved from the component list of the input mask.

22. The method according to one of Claims 1 to 21,
wherein the control device has an input mask containing a process list, a process representation field, a component list with selectable commands, in addition a parameterization field, wherein the user configures and parameterizes the process on the operating interface.

23. The method according to one of Claims 1 to 22,
wherein the process representation field of the input mask continuously shows whether the parameterization for the commands used in the configured process is complete.

24. The method according to one of Claims 1 to 23,
wherein the component list of the input mask continuously shows whether the parameterization for the components used in the configured or respectively designed process is complete.

25. The method according to one of Claims 1 to 24,
wherein only values which lie within a permissible range according to the component knowledge are accepted for the parameterization of the components and their commands.

26. The method according to one of Claims 1 to 25,
wherein it can be seen from the process list which processes are incomplete, i.e. that these contain blanks or respectively components or commands were used with incomplete parameterization, wherein those parameters which have not been entered are marked in the parameterization field and in addition the component list shows those components, and the process representation field those commands, which have not been completely parameterized.

27. The method according to one of Claims 1 to 26, wherein parallel processes can be synchronized.

28. The method according to one of Claims 1 to 27,
wherein the tool setter is provided with an expert system for the process design and for the parameterization.

29. The method according to one of Claims 1 to 28,
wherein the determined optimal dataset is stored for all successfully executed production cycles and can be loaded by the user for identical or similar production cycles.

30. A device for controlling and operating a production cell for producing plastic injection-moulded parts with an injection-moulding machine with computing/storage means, wherein the production cycle can be predefined and parameterized by the user at operator controls, wherein
a) the computing/storage means are designed to hold a knowledge base which is able to be organized decentrally, and
b) at the operator controls, an image of at least part of the equipment existing at the respective production cell or assigned to it can be created in the form of behaviourally complete components in a domain model and
c) machine cycles can be established, managed and run by means of a domain language, so that
d) the handling and operation of a production cell is facilitated in an easy and consistent manner,
wherein for any modification of the entire control the behaviourally complete components are able to be replaced and exchanged.

31. The device according to Claim 30,
wherein the control unit is designed in a component-oriented manner, wherein at least part of the equipment existing in the production cell can be registered and taken into account as a behaviourally complete component and can be controlled via the commands thereof.

32. The device according to Claims 30 or 31,
wherein an individual component represents any desired element of the injection-moulding machine or the equipment and peripheral devices assigned to it, for example the form closure, aggregate, core puller, handling device, wherein in addition purely logical components are also possible.

33. The device according to one of Claims 30 to 32,
wherein each of the components taken into account has an event interface and a command interface, and has its own component knowledge.

34. The device according to one of Claims 30 to 33,
wherein it has a control infrastructure with an organized collection of virtual components corresponding to the elements of the production cell, each with its assigned knowledge base, wherein the production cell can be controlled in a component-oriented manner and the production cycle can be driven by means of the commands according to the configured cycle.

35. The device according to one of Claims 30 to 34,
wherein each component contains relevant procedural, mechanical and further relevant knowledge to provide for a protection of the machine part represented by the component.

36. The device according to Claim 30,
wherein the control, programming and configuration can be executed via the operating device on the basis of a component-oriented domain language for modelling cyclic and/or non-cyclic machine processes based on a representation of the machine as an organized collection of components, and the computing/storage means are designed to hold a decentrally organized knowledge base for the components.

37. The device according to Claim 36,
wherein at least part of the equipment present at the respective production cell or assigned to it is able to be registered and taken into account as components in the control unit wherein the components are displayed on the screen or respectively operator interface and can be used by the user as the basis for modelling any desired processes.

38. A control unit according to Claim 37,
wherein the operator interface has an input mask containing a process list, a process representation field, a component list with selectable commands and, in addition, a parameterization field.

39. The method according to one of Claims 25 to 38,
wherein the execution of a process is able to be visualized, so that the status is visible at any time and in the case of error, conclusions are made possible as to the cause.

## Revendications

1. Procédé pour la commande et l'utilisation d'une cellule de production pour la fabrication de pièces moulées par injection en plastique, en particulier en intégrant au moins une partie des appareils périphériques qui lui sont attribués, sachant que le cycle de production est prédéfini et paramétré par l'utilisateur, dans lequel
a) lors de l'utilisation et du fonctionnement d'une presse de moulage par injection, il est possible de travailler de manière constante,
b) des moyens de calcul/mémoire sont attribués à la commande pour enregistrer une base de connaissances organisée de manière décentralisée, et
c) les cycles de la presse sont réalisés, gérés et exécutés sur la base de composants comportementalement complets faisant partie d'un modèle de domaine, à l'aide d'un langage de modèle, sachant que les composants comportementalement complets peuvent être remplacés et échangés pour chaque transformation au choix de la totalité de la commande.

2. Procédé selon la revendication 1, dans lequel la commande, la programmation et la configuration s'effectue en tant que regroupement ordonné de composants sur la base d'un langage de domaine orienté composants pour modéliser des cycles de machine cycliques et/ou non-cycliques, en partant d'une représentation de la machine, sachant que le cycle est configuré respectivement *élaboré* par l'utilisateur.

3. Procédé selon la revendication 1 ou 2, dans lequel un composant de n'importe quel élément de la cellule de production *incarne* y compris les appareils périphériques qui lui sont peut-être attribués, en particulier également des composants d'horloge.

4. Procédé selon l'une des revendications 1 à 3, dans lequel pour chaque espace de problème dans la commande, la solution est écrite sur un niveau spécialisé sur la base d'un modèle de domaine décisif et à l'aide de langages de domaine techniques spécifiques, et le code de programme en est automatiquement généré pour la conversion technique.

5. Procédé selon l'une des revendications 1 à 4, dans lequel pour décrire des cycles quelconques dans la cellule de production, un langage de domaine est déterminé, sachant que le langage de domaine est visualisé de manière graphique et/ou textuelle sur le terminal utilisateur respectivement sur un masque de saisie.

6. Procédé selon l'une des revendications 1 à 5, dans lequel au moins une partie des dispositifs présents sur la cellule de production respective ou qui lui sont attribués sont saisis et pris en compte comme composants dans la commande et que les composants apparaissent sur l'écran respectivement l'interface utilisateur et peuvent être employés par l'utilisateur comme base pour la modélisation de cycles quelconques.

7. Procédé selon l'une des revendications 1 à 6, dans lequel les composants sont des groupes ou modules concrets comme des axes d'injection et/ou des axes de plastification et/ou un groupe d'injection et/ou un axe de fermeture du moule et/ou un axe de moule et/ou un plateau tournant de moule et/ou des dispositifs d'arrachage de la carotte et/ou des coulisseaux et/ou des axes de poussoir et/ou une robotique de prélèvement et/ou des axes de réglage de colonne et/ou une unité de chauffage et de refroidissement et/ou un groupe hydraulique (le cas échéant) et/ou des éléments et groupes électroniques comme des moyens de capteurs et/ou des outils de manipulation pour l'alimentation de matière et/ou des outils de manipulation de pièces moulées par injection et/ou la pièce moulée par injection.

8. Procédé selon l'une des revendications 1 à 7, dans lequel chacun des composants comportementalement complets saisis comporte une connaissance pertinente sur le plan de la technique de procédé, de la mécanique et autre pour fournir de manière ordonnée, en assemblage avec d'autres composants, les fonctions nécessaires dans un cycle sous la forme d'ordres.

9. Procédé selon l'une des revendications 1 à 8, dans lequel chacun des composants comportementalement complets saisis comporte une connaissance pertinente sur le plan de la technique de procédé, de la mécanique et autre pour permettre une protection de la pièce de la presse représentée par le composant ainsi que son utilisation en toute sécurité.

10. Procédé selon l'une des revendications 1 à 9, dans lequel les paramètres de fonctionnement nécessaires dans le cycle de production sont enregistrés par l'utilisateur au moyen d'une unité de traitement des données sauvegardant ces paramètres de fonctionnement, sachant que la commande tient compte de ce qui est possible physiquement mais aussi côté machine et côté outil et dû à la construction.

11. Procédé selon l'une des revendications 1 à 10, dans lequel chaque composant fournit des ordres de commande sous forme d'une interface d'ordres et présente une interface d'événements.

12. Procédé selon la revendication 11, dans lequel le composant est manipulé par l'interface d'ordres pour déclencher le cas échéant un ou plusieurs ordres à d'autres composants coopérant avec ce composant.

13. Procédé selon la revendication 11 ou 12, dans lequel des modifications d'état des composants sous formes d'évènements abonnables peuvent être fournies par l'interface d'événements et être employées comme base de synchronisation directement entre les composants et comme sources de synchronisation pour influencer le cycle de production.

14. Procédé selon l'une des revendications 1 à 13, dans lequel au sens de l'orientation objet, la pièce moulée par injection est traitée comme un composant virtuel, sachant que des valeurs caractéristiques du procédé de fabrication correspondent à la pièce moulée par injection, le statut des pièces moulées par injection est enregistré et est employé pour influencer le procédé de moulage par injection, par exemple pour la commande d'une pièce rejetée.

15. Procédé selon l'une des revendications 1 à 14, dans lequel des cycles cycliques et/ou non-cycliques quelconques sont réalisés et exécutés au niveau de la cellule de production sur la base du modèle de composant.

16. Procédé selon l'une des revendications 1 à 15, dans lequel en partant d'une représentation de la cellule de production ou de parties de celle-ci, en particulier d'une presse de moulage par injection comme regroupement ordonné de composants, des cycles peuvent être programmés librement sur un masque de saisie de l'interface utilisateur.

17. Procédé selon l'une des revendications 1 à 16, dans lequel le cycle de production, en particulier le cycle de moulage par injection, basé sur les ordres des composants physiquement présents, est réalisé de manière interactive et comprend les étapes suivantes :
a) la commande propose tous les composants physiquement présents ;
b) l'utilisateur sélectionne le composant nécessaire pour le cycle au sens d'une présélection ;
c) l'utilisateur sélectionne une ordre ou une source d'événement d'un composant et insère l'ordre ou la source d'événement dans le cycle ;
d) la sauvegarde de cette saisie dans l'unité de traitement des données ;
e) la répétition des étapes c) à d) jusqu'à ce que le cycle soit complet ;
sachant que le paramétrage des ordres, des sources d'événement et des composants comprend les étapes suivantes :
f) la sélection d'un ordre ou d'une source d'événement dans le cycle respectivement d'un composant employé,
g) l'affichage des paramètres correspondants,
h) la saisie des paramètres,
i) la sauvegarde de cette saisie dans l'unité de traitement des données ;
j) la répétition des étapes f) à i) jusqu'à ce que tous les ordres et sources d'événement dans le cycle respectivement tous les composants employés soient paramétrés,
sachant que les étapes f) à i) peuvent être exécutées avant ou pendant la réalisation du cycle jusqu'à ce que tous les ordres, sources d'événement et composants employés dans le cycle soient paramétrés.

18. Procédé selon l'une des revendications 1 à 17, dans lequel à partir du groupement ordonné de composants sur un masque de saisie, une présélection de composants nécessaires pour le cycle est proposée et/ou choisie.

19. Procédé selon l'une des revendications 1 à 18, dans lequel tous les dispositifs présents sur une cellule de production respective ou qui lui sont attribués, comme des appareils périphérique et des outils par exemple, sont traités comme des composants.

20. Procédé selon l'une des revendications 1 à 19, dans lequel avant le début de la production, les cycles de la presse sont configurés graphiquement sur le masque de saisie et les paramètres de fonctionnement sont saisis orientés ordres et composants, sachant qu'en présence d'un jeu de données correspondant déjà réalisé, celui-ci sera chargé de préférence.

21. Procédé selon l'une des revendications 1 à 20, dans lequel la configuration d'un cycle est faite librement et en raison de la connaissance de composant à l'insertion d'un ordre sur le masque de saisie, d'autres ordres sont insérés automatiquement comme espaces vides dans le cycle pour les étapes suivantes nécessaires obligatoires, sachant que l'utilisateur remplit les espaces vides par des ordres appropriés concrets des composants concernés à partir de la liste de composants du masque de saisie.

22. Procédé selon l'une des revendications 1 à 21, dans lequel le dispositif de commande présente un masque de saisie contenant une liste de cycles, un champ de représentation des cycles, une liste de composants avec des ordres sélectionnables, plus un champ de paramétrage, sachant que l'utilisateur configure et paramètre le cycle sur l'interface utilisateur.

23. Procédé selon l'une des revendications 1 à 22, dans lequel pour les commandes employées dans le cycle configuré, il est possible de voir en permanence dans le champ de représentation des cycles du masque de saisie, si le paramétrage est complet.

24. Procédé selon l'une des revendications 1 à 23, dans lequel pour les composants employés dans le cycle configuré respectivement formé, il est possible de voir en permanence dans la liste de composants du masque de saisie, si le paramétrage est complet.

25. Procédé selon l'une des revendications 1 à 24, dans lequel pour le paramétrage des composants et de leurs ordres, seules des valeurs peuvent être prises qui sont situées dans une plage autorisée conformément à la connaissance des composants.

26. Procédé selon l'une des revendications 1 à 25, dans lequel on peut voir dans la liste de cycles, quels cycles sont incomplets, c'est-à-dire qu'ils contiennent des espaces vides, respectivement que des composants ou des commandes ont été utilisés qui ne sont pas complètement paramétrés, sachant que dans le champ de paramétrage sont marqués les paramètres qui ne sont pas saisis et en outre, on peut voir sur la liste des composants les composants qui ne sont pas complètement paramétrés et on peut voir dans le champs de représentation des cycles les commandes qui ne sont pas complètement paramétrées.

27. Procédé selon l'une des revendications 1 à 26, dans lequel des cycles parallèles peuvent être synchronisés.

28. Procédé selon l'une des revendications 1 à 27, dans lequel tant pour la formation des cycles que pour le paramétrage, un système expert est mis à disposition de l'ajusteur.

29. Procédé selon l'une des revendications 1 à 28, dans lequel pour tous les cycles de production exécutés avec succès, le jeu de données optimal établi est sauvegardé et peut être chargé par l'utilisateur pour des cycles de production égaux ou similaires.

30. Dispositif pour la commande et l'utilisation d'une cellule de production pour la fabrication de pièces moulées par injection en plastique avec une presse de moulage par injection comprenant des moyens de calcul/mémoire, dans lequel le cycle de production peut être pré-défini et paramétré par l'utilisateur sur un dispositif d'utilisation, sachant que
a) les moyens de calcul/mémoire sont formés pour enregistrer une base de connaissances organisable de manière décentralisée et
b) sur le dispositif d'utilisation, une image d'au moins une partie des dispositifs présents sur la cellule de production respective ou qui lui sont attribués peut être produite dans un modèle de domaine sous forme de composants comportementalement complets, et
c) des cycles de machine peuvent être réalisés, gérés et exécutés à l'aide d'un langage de domaine, de façon à ce que
d) l'utilisation et le fonctionnement d'une cellule de production soit possible de manière simple et constante
e) sachant que les composants comportementalement complets sont remplaçables et échangeables pour chaque transformation au choix de la totalité de la commande.

31. Dispositif selon la revendication 30, dans lequel la commande est orientée composant, sachant qu'au moins une partie des dispositifs présents sur la cellule de production respective peuvent être saisis et pris en compte comme des composants comportementalement complets et peuvent être commandés par ses ordres.

32. Dispositif selon la revendication 30 ou 31, dans lequel un composant simple représente un élément quelconque de la presse de moulage par injection ou des dispositifs et appareils périphériques qui lui sont attribués, par exemple, fermeture du moule, groupe, dispositifs d'arrachage de la carotte, appareil de manipulation, sachant qu'en outre des composants purement logiques sont possibles.

33. Dispositif selon l'une des revendications 30 à 32, dans lequel chacun des composants pris en compte présente une interface d'événements ainsi qu'une interface d'ordres et dispose chacun de sa propre connaissance de composants.

34. Dispositif selon l'une des revendications 30 à 33, qui présente une infrastructure de commande avec un groupement ordonné de composants virtuels, correspondant aux groupes de la cellule de production, avec une base de connaissance respective correspondante, sachant que la cellule de production peut être commandée orientée composants et le cycle de production peut être exploité au moyen des ordres conformément au cycle configuré.

35. Dispositif selon l'une des revendications 30 à 34, dans lequel chaque composant contient une connaissance pertinente sur le plan de la technique de procédé, de la mécanique et autre pour permettre une protection de la pièce de la presse représentée par le composant.

36. Dispositif selon la revendication 30, dans lequel la commande, la programmation et la configuration peuvent être exécutées par le biais du dispositif d'utilisation sur la base d'un langage de domaine orienté composants pour modéliser des cycles de machine cycliques et/ou non-cycliques, en partant d'une représentation de la machine en tant que regroupement ordonné de composants, et les moyens de calcul/mémoire sont formés pour enregistrer une base de connaissance pour les composants organisée de manière décentralisée.

37. Dispositif selon la revendication 36, dans lequel moins une partie des dispositifs présents sur la cellule de production respective ou qui lui sont attribués peuvent être saisis et pris en compte comme des composants, sachant que les composant apparaissent sur l'écran respectivement l'interface utilisateur et peuvent être employés par l'utilisateur comme base pour la modélisation de cycles quelconques.

38. Dispositif selon la revendication 37, dans lequel l'interface utilisateur présente un masque de saisie contenant une liste de cycles, un champ de représentation des cycles, une liste de composants avec des ordres sélectionnables, plus un champ de paramétrage.

39. Dispositif selon l'une des revendications 25 à 38, dans lequel l'exécution d'un cycle peut être visualisée, de façon à ce que l'état soit visible à tout moment et qu'en cas d'erreur des retours sur la cause soient possibles.
